(19) Europäisches Patentamt
European Patent Office
Office européen des brevets

(11) **EP 3 662 346 B1**

(12) **EUROPÄISCHE PATENTSCHRIFT**

(45) Veröffentlichungstag und Bekanntmachung des Hinweises auf die Patenterteilung:
**22.06.2022   Patentblatt 2022/25**

(21) Anmeldenummer: **18765536.0**

(22) Anmeldetag: **27.07.2018**

(51) Internationale Patentklassifikation (IPC):
**G05B 19/042** (2006.01)       **G06F 3/0362** (2013.01)
**G06F 3/038** (2013.01)       **G06F 3/01** (2006.01)
**G05G 1/08** (2006.01)

(52) Gemeinsame Patentklassifikation (CPC):
**G06F 3/016; G05B 19/0423; G06F 3/0362;**
**G06F 3/038;** G05B 2219/23067; G05B 2219/36133;
G05G 1/08

(86) Internationale Anmeldenummer:
**PCT/AT2018/060168**

(87) Internationale Veröffentlichungsnummer:
**WO 2019/023728 (07.02.2019 Gazette 2019/06)**

(54) **STEUERVORRICHTUNG FÜR INDUSTRIELLE MASCHINEN**

CONTROL DEVICE FOR INDUSTRIAL MACHINES

DISPOSITIF DE COMMANDE POUR MACHINES INDUSTRIELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2017   AT 506422017**

(43) Veröffentlichungstag der Anmeldung:
**10.06.2020   Patentblatt 2020/24**

(73) Patentinhaber: **KEBA Industrial Automation GmbH**
**4040 Linz (AT)**

(72) Erfinder:
• **FISCHER, Harald**
**5323 Ebenau (AT)**
• **MAHR, Wolfgang**
**4040 Steyregg (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
EP-A1- 1 403 619       CN-B- 104 908 046
US-A1- 2006 255 683     US-A1- 2016 224 114
US-A1- 2016 271 792

## Beschreibung

Die Erfindung betrifft eine Steuervorrichtung für industrielle Maschinen mit gesteuerten Bewegungsantrieben für Maschinenkomponenten, insbesondere für gesteuert bewegbare Maschinenachsen, sowie ein Verfahren zum Betreiben einer elektronischen Steuervorrichtung für industrielle Maschinen mit gesteuerten Bewegungsantrieben, wie dies in den Ansprüchen 1 und 14 angegeben ist.

Als Stand der Technik gibt es derzeit Steuervorrichtungen für Maschinen, welche zum manuellen Abgeben bzw. Eingeben von Bewegungs-Steuerbefehlen von Seiten einer Bedienperson wenigstens ein Drehrad bzw. ein Drehsteller-Bedienelement aufweisen. Bei solchen Drehrädern ist typischerweise ein Inkrementalgeber mit in der Regel 50 oder 100 Inkrementen pro Umdrehung implementiert. Diese elektromechanisch umgesetzten Inkrementalgeber verfügen über ein möglichst geringes Rast- bzw. Bremsmoment, damit diese nach einem erstmaligen Anschubsen durch die Bedienperson einen physischen Nachlauf aufweisen und eine Steuerbefehl-Nachlaufzeit bereitstellen können. Ein Roboter oder eine Achse einer Maschine bewegt sich dabei proportional zur Rotation des Drehrades bzw. proportional zu den durch die Rotation gelieferten Inkrementen. Diese Art der Steuerung wird vor allem zum Überwinden von langen Verfahrwegen bzw. Bewegungsstrecken verwendet, wobei andererseits auch ein präzises Positionieren in die Endlage möglich sein soll.

Nachteilig ist, dass solche Drehräder einer hohen Belastung unterliegen, wenn weitläufige bzw. lange andauernde Maschinenbewegungen auszuführen sind. Insbesondere ist es für die Bedienperson offensichtlich, dass je kräftiger das Drehrad angeschubst wird, umso schneller und weiter bzw. länger sich die Maschine bzw. Maschinenkomponente bewegt. Um beispielsweise die Strecke zwischen den Endlagen einer Maschinenachse abfahren zu können, kann es je nach Maschinenachse vorkommen, dass bis zu zwanzig oder auch mehr "Schubser" mit voller Kraft gegenüber dem Drehrad notwendig sind. Wie anfangs erwähnt, ist die Umdrehung des Drehrades direkt proportional mit der Bewegung der Maschine. Bekannt ist es in diesem Zusammenhang auch, dass die Bedienperson ein Drehbetätigungs- zu Ausführungsverhältnis auswählen und voreinstellen kann. Dieses Verhältnis kann dabei 1:1 betragen, wobei ein einziges Inkrement des Drehrades genau einer Einheitsmaschinenbewegung, also einer kleinen Schrittweite entspricht. Dadurch kann die Maschine möglichst präzise bewegt werden. In einer anderen Voreinstellung kann das Verhältnis beispielsweise 1:10 betragen, wobei ein Inkrement des Drehrades genau 10 Einheitsmaschinenbewegungen, also einer relativ großen Schrittweite entspricht. Bei dieser Einstellung ist es der Bedienperson ermöglicht, relativ schnell weite Stellwege bzw. Verfahrstrecken zu überwinden. Bei einem Vergessen des Umschaltens von der hohen Schrittweite pro Inkrement auf eine niedrige Schrittweite pro Inkrement kann es schnell zu einer Kollision bzw. zu Beschädigungen an Maschinenteilen, Werkzeugen oder Werkstücken kommen. Zudem ist ein Umschalten zwischen diesen Stufen von den meisten Benutzern nicht gewollt. Um den Nachlauf zu beeinflussen, werden teilweise Drehknöpfe mit großer Masse und besonders reibungsarmen Drehlagerungen verwendet. Drehknöpfe mit größerer Masse und speziellen Drehlagerungen sind teurer zu fertigen und benötigen auch mehr Platz an der Steuerkonsole.

Die US 2006/0255683 A1 beschreibt ein Drehsteller-Bedienelement mit haptischer Rückmeldefunktion gegenüber einer Bedienperson. Dieses Drehsteller-Bedienelement mit einem verdrehbar gelagerten Betätigungsorgan ist für Anwendungen im IT-Bereich, im Unterhaltungselektronik-Bereich, im Funkfernsteuerungs-Bereich, im Video-/Audio-Bearbeitungsbereich, im Automobil-Bereich, oder im Bereich der Bedienung und Steuerung von Maschinen vorgesehen. Dieses haptisch rückmeldende Drehsteller-Bedienelement umfasst eine Basiseinheit, ein drehbar gelagertes Betätigungsorgan, eine piezoelektrischen Motor, eine Drehbewegungs-Steuervorrichtung für den piezoelektrischen Motor und eine Drehbewegungs-Detektierungsvorrichtung für das Betätigungsorgan. Der piezoelektrische Motor ist dazu geeignet und vorgesehen, ein hohes Drehmoment selbst dann zu erzeugen, wenn er mit geringer Drehzahl betrieben wird. Dadurch kann auch dann, wenn das Betätigungsorgan mit geringer Geschwindigkeit rotiert, ein ausreichend hohes haptisches Feedback auf das Betätigungsorgan ausgeübt werden. Aufgrund dessen, dass die Basiseinheit und das Betätigungsorgan einerseits am Stator und anderseits am Rotor des piezoelektrischen Motors fixiert sind, kann ein geringer Totgang bzw. hohe Spielfreiheit erreicht werden. Dadurch soll intensives haptisches Feedback und auch eine große Bandbreite an unterschiedlichen, haptischen Feedbacks erzeugt werden können.

Aus der EP 1 403 619 B1 ist ein elektronisches Bediensystem bekannt, welches als Teil eines Fahrerinformationssystems in Kraftfahrzeugen vorgesehen ist. Zudem soll dieses Bediensystem als Anzeige- und Bedienvorrichtung in Zusammenhang mit der Steuerung von Maschinen, zum Beispiel in der industriellen Fertigung, genutzt werden können. Dieses Bediensystem umfasst eine elektronische Steuereinheit, welche über eine Recheneinheit verfügt, eine Anzeigeeinheit, welche zur Visualisierung grafischer Darstellungen geeignet ist, und eine Bedieneinheit, mit welcher manuelle Eingriffe bezüglich der Funktionalitäten des jeweiligen Systems vorgenommen werden können. Zur Veränderung von Parametern des Systems ist dabei vorgesehen, dass eine Anzeigemarke in Art eines Cursors über die Anzeigefläche der Anzeigeeinheit bewegt wird und dadurch eine zur Verfügung stehende Funktion angewählt wird. Nach entsprechender Anwahl der gewünschten Funktion durch cursorartige Verschiebung der Anzeigemarke wird ein weiteres Bedienelement betätigt, um damit Parameter verändern zu können. Dieses zweite Bedienelement ermöglicht beispielsweise eine Veränderung von Parameterwerten in Verbindung mit der zuvor über ein erstes Bedienelement ausgewählten Funktion. Die in dieser Druckschrift beschriebenen Maßnahmen sind für die Steuerung bzw. Beeinflussung von Maschinen mit Bewegungsantrieben nur bedingt geeignet. Die beschriebenen Maßnahmen eignen sich vielmehr für eine Anwendung in Verbindung mit relativ unkritischen Funktionalitäten, wie sie in Fahrerinformationssystemen von Kraftfahrzeugen vorkommen. Eine Bedienung von industriellen Maschinen mit Bewegungsantrieben wäre mit dieser vorbekannten Ausführung nur bedingt zufriedenstellend.

Die EP 1 075 979 B1 beschreibt ein Verfahren zum Betreiben einer Multifunktionsbedieneinrichtung, welche ebenso in Verbindung mit Kraftfahrzeugen vorteilhaft einsetzbar ist. Bei dieser Multifunktionsbedieneinrichtung werden Menüs und/oder Bedienfunktionen auf einer Anzeigeeinheit dargestellt und die besagten Menüs und/oder Funktionen über Tastelemente und zumindest ein Drehbetätigungselement betätigt. Zumindest eines dieser Drehbetätigungselemente ist dabei hinsichtlich seiner Drehrichtungen und Drehstellungen und/oder Raststellungen und/oder Betätigungsanschläge frei programmierbar. Diese freie Programmierung erfolgt dabei derart, dass haptische Rückmeldungen im Drehbetätigungsweg erzeugt werden, die den jeweils abgerufenen Menüs oder Funktionen zugeordnet sind. Jeder Betätigungsfunktion ist dabei ein Satz haptischer Daten zugeordnet, die dynamisch an eine Funktionsdatenänderung angepasst werden. Damit ist eine intuitive Bedienung ermöglicht, nachdem der Bedienperson haptische Rückmeldungen gegeben werden, die in Abhängigkeit der jeweiligen Menüs bzw. Funktionen automatisch angepasst werden. Eine Bedienung von industriellen Maschinen mit Bewegungsantrieben ist mit der angegebenen Vorrichtung jedoch nur bedingt praktikabel.

Aufgabe der vorliegenden Erfindung war es, die Nachteile des Standes der Technik zu überwinden und eine Vorrichtung und ein Verfahren zur Verfügung zu stellen, mittels derer ein Benutzer in der Lage ist, eine möglichst praktikable Bedienung von industriellen Maschinen mit Bewegungsantrieben vorzunehmen.

Insbesondere liegt eine Aufgabe der vorliegenden Erfindung darin, die Bedien- bzw. Programmierbarkeit von Maschinen mit gesteuert verfahrbaren Komponenten bzw. aktiv verstellbaren Maschinenachsen zu verbessern.

Diese Aufgabenstellung wird durch eine Vorrichtung und ein Verfahren gemäß den Ansprüchen gelöst.

Demnach ist eine Steuervorrichtung für industrielle Maschinen mit gesteuerten Bewegungsantrieben für Maschinenkomponenten vorgesehen, welche Steuervorrichtung zumindest eine Mensch-Maschine-Schnittstelle, insbesondere steuerungstechnische Ein- und Ausgabemittel, umfasst. Dabei ist wenigstens ein Bedienelement zur manuellen Beeinflussung oder Vorgabe von Verstellbewegungen von zumindest einer der Maschinenkomponenten, beispielsweise in Art von gesteuert verstellbaren Maschinenachsen, ausgeführt. Zumindest ein Bedienelement der Mensch-Maschine-Schnittstelle ist als Drehsteller-Bedienelement mit einem um eine Drehachse drehbar gelagerten Betätigungsorgan ausgebildet ist, welches Betätigungsorgan durch die Betätigungskraft einer Bedienperson verdrehbar ist. Drehbewegungen des Betätigungsorgans respektive seiner Drehachse werden von einer elektronischen Auswerte- und Steuervorrichtung evaluiert und daraus entsprechende Steuerbefehle abgeleitet. Bevorzugt ist das Drehsteller-Bedienelement derart ausgeführt, dass eine bidirektionale Einleitung von Drehbewegungen ermöglicht ist, wobei die jeweilige Drehrichtung elektronisch detektierbar ist.

Die entsprechende Steuervorrichtung zeichnet sich dadurch aus, dass die Auswerte- und Steuervorrichtung zur automatischen bzw. automatisierten Unterscheidung zumindest zwischen einem ersten Betriebsmodus und einem zweiten Betriebsmodus ausgebildet ist, wobei im ersten Betriebsmodus Verstellbewegungen einer angesteuerten Maschinenkomponente bzw. Maschinenachse nur so lange ausgeführt werden, solange von der Auswerte- und Steuervorrichtung eine Drehbewegung des Betätigungsorgans respektive seiner Drehachse erfassbar ist. Im zweiten Betriebsmodus werden Verstellbewegungen einer angesteuerten Maschinenkomponente bzw. Maschinenachse unmittelbar nach Beendigung der Drehbewegung des Betätigungsorgans oder seiner Drehachse ohne einer Unterbrechung der Verstellbewegung der angesteuerten Maschinenkomponente für eine definierte bzw. zeitlich begrenzte Nachlaufzeit fortgesetzt.

Die automatische Unterscheidung bzw. der automatische Wechsel zwischen dem ersten und dem zweiten Betriebsmodus erfolgt in Abhängigkeit einer von der Auswerte- und Steuervorrichtung erfassten Winkelgeschwindigkeit oder Winkelbeschleunigung, welche zu Beginn einer von einer Bedienperson gegenüber dem Betätigungsorgan jeweils eingeleiteten Drehbewegung vorliegt. Insbesondere wird die automatische Unterscheidung zwischen dem ersten und dem zweiten Betriebsmodus basierend auf einer von der Auswerte- und Steuervorrichtung erfassten Winkelgeschwindigkeit oder Winkelbeschleunigung vorgenommen, welche Winkelgeschwindigkeit oder Winkelbeschleunigung während oder nach einer Anfangsphase einer Drehbetätigung des Betätigungsorgans vorliegt, oder zu einem Evaluierungszeitpunkt nach dem Beginn einer gegenüber dem Betätigungsorgan jeweils eingeleiteten Drehbetätigung des Betätigungsorgans vorliegt oder vorhanden ist. Demnach wird das initiale Drehbewegungsverhalten des Betätigungsorgans erfasst, evaluiert und zur wahlweisen Aktivierung des ersten oder zweiten Betriebsmodus herangezogen.

Insbesondere ist die Auswerte- und Steuervorrichtung zur automatischen bzw. automatisierten Umschaltung zwischen dem ersten und zweiten Betriebsmodus - und umgekehrt - vorgesehen, respektive zur automatischen bzw. automatisierten Aktivierung des ersten oder zweiten Betriebsmodus ausgebildet.

Durch die angegebenen Maßnahmen ist eine verbesserte manuelle Bedienung bzw. Kontrolle von Bewegungsantrieben bzw. von damit bewegten Maschinenkomponenten ermöglicht. Insbesondere ist dadurch für eine Bedienperson eine Bedienungssystematik geschaffen, welche eine rasch verständliche bzw. eine intuitive manuelle Bedienung von verfahrbaren Maschenkomponenten, insbesondere von sogenannten Maschinenachsen, ermöglicht. Die entsprechenden Bedienhandlungen können dabei relativ komfortabel und zugleich fehlervermeidend ausgeführt werden. Durch die eindeutigen Bedienhandlungen bzw. durch die damit einhergehende bewusste Abgabe von Bewegungs-Steuerbefehlen kann das Beschädigungsrisiko gegenüber einer gesteuerten Maschine minimiert und die Personensicherheit gesteigert werden Insbesondere kann eine von manuell angesteuerten Maschinen ausgehende Gefahr reduziert werden, nachdem unbeabsichtigte bzw. ungewollte Steuerbefehle vermieden bzw. hintangehalten werden können.

Diese vorteilhaften Wirkungen werden unter anderem dadurch erreicht, dass die Aktivierung des jeweiligen Betriebsmodus bzw. die Umschaltung zwischen den jeweiligen Betriebsmodi automatisch erfolgt und die entsprechende Maschine daher relativ fehlervermeidend und auch komfortabel sowie rasch zu bedienen ist. Insbesondere kann eine Unachtsamkeit des Benutzers nicht dazu führen, dass im Zuge einer vorzunehmenden Feinjustierung der Position einer Maschinenkomponente, was vorzugsweise im ersten Betriebsmodus erfolgt, irrtümlich der zweite Betriebsmodus vorliegt, welcher zur Grob-Positionierung bzw. zum Ausführen von relativ weitläufigen Stellbewegungen mit relativ hohen Bewegungsgeschwindigkeiten vorgesehen ist. In vorteilhafter Art und Weise ist also eine manuelle Umschaltung zwischen zwei Betriebsmodi zum Feinjustieren bzw. Schnellverfahren nicht erforderlich. Die Gefahr von Kollisionen mit Werkstücken bzw. sonstigen Objekten und das Risiko der Beschädigung von Maschinenkomponenten, Werkstücken oder Werkzeugen kann somit verringert werden.

Darüber hinaus kann das angegebene Drehsteller-Bedienelement relativ kostengünstig gefertigt werden, nachdem keine Drehknöpfe bzw. Betätigungsorgane mit hoher Masse und einem damit einhergehendem, möglichst hohen Trägheitsmoment erforderlich sind, um ausreichend lange, physische Nachlaufzeiten des Betätigungsorgans zu erzielen. Vielmehr ist erfindungsgemäß ein virtueller Nachlauf für die jeweilige Maschinenbewegung der angesteuerten Maschinenkomponente implementiert und kann auf Drehsteller-Bedienelemente, welche entweder verschleißanfällig sind oder aufgrund hoher Anforderungen an den Aufbau bzw. an die Mechanik relativ kostenintensiv sind und zudem einen hohen Einbau-Platzbedarf aufweisen, verzichtet werden. Die angegebene Steuervorrichtung kann somit möglichst kostengünstig und kompakt umgesetzt werden und bietet bei hoher Robustheit bzw. Langlebigkeit auch einen verbesserten Bedienkomfort.

Entsprechend einer praktikablen Maßnahme kann dabei vorgesehen sein, dass von der Auswerte- und Steuervorrichtung eine Umschaltung auf den zweiten Betriebsmodus oder eine Aktivierung des zweiten Betriebsmodus vorgenommen wird, wenn die Winkelgeschwindigkeit oder Winkelbeschleunigung des Betätigungsorgans respektive seiner Drehachse am Beginn der Einleitung einer Drehbewegung am Betätigungsorgan, also im Zuge des initialen "Aufdrehens" des Betätigungsorgans, einen vordefinierten Schwellwert, insbesondere einen bestimmten Dynamik- bzw. Beschleunigungsschwellwert erreicht hat oder überschreitet. Dadurch ist eine steuerungstechnisch zuverlässig detektierbares und eindeutig evaluierbares Kriterium gewählt, welches als Grundlage für die automatisierte Umschaltung bzw. Aktivierung der jeweiligen Betriebsmodi herangezogen wird. Ferner kann dadurch eine möglichst eindeutige bzw. fehlerfreie Unterscheidung der von der Bedienperson gewünschten bzw. beabsichtigten Art der Bewegungssteuerung erzielt werden. Zudem ist dadurch ein möglichst intuitives Bedienkonzept geschaffen, wodurch die entsprechenden Bedienhandlungen für eine Bedienperson rasch geläufig sind oder mühelos erlernbar sind.

Die Auswerte- und Steuervorrichtung kann auch dazu eingerichtet sein, eine Nachlaufzeit oder ein Nachlaufverhalten der Bewegung der angesteuerten Maschinenkomponente in Abhängigkeit von mehreren vordefinierten Schwellwerten festzulegen bzw. zu bestimmen, welche unterschiedlichen Schwellwerte durch unterschiedlich hohe Winkelgeschwindigkeiten oder Winkelbeschleunigungen des Betätigungsorgans respektive seiner Drehachse am Beginn der Drehbewegung bzw. im Zuge der Einleitung einer Drehbewegung definiert sind. Dadurch ist eine dynamische Hochskalierung des Nachlaufverhaltens bzw. des "Nachwirkens" der Stellbewegung der Maschinenkomponente geschaffen, wodurch der Bedienkomfort bzw. die Bedienergonomie nochmals gesteigert werden kann. Insbesondere können dadurch relativ dynamische Drehbetätigungen des Betätigungsorgans in vergleichsweise ausgeprägtere Nachlaufverhalten der Maschinenbewegung umgesetzt werden.

Entsprechend einer vorteilhaften Maßnahme kann die Auswerte- und Steuervorrichtung auch dazu ausgebildet sein, den zweiten Betriebsmodus einzuleiten oder darauf umzuschalten, wenn zusätzlich mittels einem Berührungs- oder Ergreifungserkennungsmittel, beispielsweise mittels einem kapazitiven Sensor, detektiert wird, dass das Betätigungsorgan von der Bedienperson losgelassen wurde. Dadurch kann eine besonderes eindeutige Unterscheidung zwischen einer von der Bedienperson beabsichtigten Betriebsweise gemäß dem ersten oder zweiten Betriebsmodus erreicht werden, ohne dass zusätzliche bzw. gesonderte Bedienhandlungen erforderlich sind. Ein einfaches Loslassen des Betätigungsorgans nach einer relativ dynamischen Beschleunigung des Betätigungsorgans ist ein relativ unmissverständliches Anzeichen dafür, dass der zweite Betriebsmodus des Drehsteller-Bedienelementes gewünscht ist bzw. zu aktivieren ist. Anstelle eines vorzugsweise kapazitiven Erkennungsmittels sind auch Erfassungsmittel denkbar, welche auf einem resistiven oder drucksensitiven Prinzip arbeiten.

Gemäß einer zweckmäßigen Ausführungsform kann auch vorgesehen sein, dass die Auswerte- und Steuervorrichtung eine Nachlaufzeit oder ein Nachlaufverhalten der Bewegung der angesteuerten Maschinenkomponente in Abhängigkeit der aktuellen Position der angesteuerten Maschinenkomponente bzw. Maschinenachse, beispielsweise in Bezug auf eine technische oder mechanische Endposition oder in Bezug auf einen kollisionsfreien Bewegungsspielraum, unterschiedlich festlegt bzw. bestimmt. Dadurch, dass von der Steuervorrichtung auch Informationen über die jeweilige Position bzw. Relativlage der angesteuerten Maschinenachse verarbeitet bzw. involviert werden, können ungünstige bzw. abrupte Steuerbewegungen effizient vermieden werden. Dies begünstigt einen harmonischen und dennoch möglichst raschen Bewegungsablauf der angesteuerten Maschine. Allfällige Missverständnisse oder Unachtsamkeiten der Bedienperson führen dadurch auch nicht zu kritischen bzw. nicht zu stark beanspruchenden Maschinenbewegungen.

Von Vorteil kann es auch sein, wenn die Auswerte- und Steuervorrichtung dazu ausgebildet ist, eine Nachlaufzeit und/oder eine Geschwindigkeit der Bewegung der angesteuerten Maschinenkomponente zumindest einmal oder mehrmals zu erhöhen, wenn die erfasste Winkelgeschwindigkeit oder Winkelbeschleunigung des Betätigungsorgans oder seiner Drehachse den vordefinierten Schwellwert innerhalb einer vordefinierten Bewertungszeitspanne zweimal oder mehrmals erreicht oder überschreitet. Insbesondere kann dadurch auf automatisierte Weise das Nachlaufverhalten adaptiert, insbesondere intensiviert werden, wenn ein zwei- oder mehrfaches Anschubsen des Betätigungsorgans innerhalb der vordefinierten Bewertungszeitspanne erfolgt. Dadurch können relativ weite Stellwege noch rascher abgefahren werden bzw. können dadurch die gewünschten Endpositionen noch einfacher bzw. komfortable erreicht werden. Auch hierfür müssen seitens der Bedienperson keine zusätzlichen Einstelltätigkeiten bzw. keine speziellen Umstelltätigkeiten vorgenommen werden. Insbesondere kann dadurch automatisiert eine höhere Verstell- und/oder Nachlaufgeschwindigkeit und/oder eine längere Nachlaufzeit aktiviert bzw. eingestellt werden.

Zweckmäßig kann es in diesem Zusammenhang sein, wenn die vordefinierte Bewertungszeitspanne durch eine erneute Drehbetätigung des Betätigungsorgans vor dem Eintreten bzw. Erreichen von dessen Stillstand festgelegt ist, oder durch eine erneute Drehbetätigung des Betätigungsorgans innerhalb von weniger als 2 Sekunden, vorzugsweise von weniger als 1 Sekunde, ab dem Loslassen bzw. nach dem Freigeben des Betätigungsorgans durch die Bedienperson definiert ist. Dadurch kann eine möglichst eindeutige Abgrenzung zwischen einem gewünschten Steuerverhalten gemäß dem ersten oder zweiten Betriebsmodus erzielt werden.

Eine zweckmäßige Maßnahme zum Beenden bzw. Abbrechen des zweiten Betriebsmodus bzw. zum bedarfsweisen Stoppen einer Nachlaufbewegung der angesteuerten Maschinenkomponente liegt vor, wenn mittels einem Berührungs- oder Ergreifungserkennungsmittel, beispielsweise mittels einem kapazitiven Sensor, detektiert wird, dass das Betätigungsorgan während dem Vorliegen des zweiten Betriebsmodus von der Bedienperson wieder ergriffen und von der Bedienperson daraufhin keine Drehbetätigung eingeleitet wurde, oder von der Bedienperson eine Drehbetätigung des Betätigungsorgans in die Gegenrichtung eingeleitet wurde. Insbesondere ist dadurch für die Bedienperson ein intuitiver und rasch umsetzbarer Abbruch einer steuerungstechnisch nachlaufenden Maschinenbewegung ermöglicht.

Alternativ dazu kann auch vorgesehen sein, dass der zweite Betriebsmodus beendet und eine aktuell ausgeführte Bewegung einer angesteuerten Maschinenkomponente umgehend gestoppt wird, wenn während dem Vorliegen des zweiten Betriebsmodus von der Bedienperson eine Drehbetätigung des Betätigungsorgans in die Gegenrichtung eingeleitet wird. Insbesondere ist es dadurch nicht unbedingt erforderlich, ein Berührungs- oder Ergreifungserkennungsmittel in Bezug auf das Betätigungsorgan vorzusehen.

Weiters ist es möglich, dass der zweite Betriebsmodus beendet und eine aktuell ausgeführte Bewegung einer angesteuerten Maschinenkomponente umgehend gestoppt wird, wenn das Betätigungsorgan seitens der Bedienperson in Axialrichtung seiner Drehachse mit einem Mindestwert einer Axialkraft beaufschlagt wird, oder in Axialrichtung seiner Drehachse verstellt, insbesondere hineingedrückt, wird. Auch dadurch ist ein intuitiv aktivierbarer Not-Stopp erzielbar bzw. ein vergleichsweise abruptes Stoppen einer durch die angegebenen Steuerungsmaßnahmen quasi nachlaufenden und normalerweise allmählich abklingenden Maschinenbewegung ermöglicht.

Von besonderem Vorteil kann es auch sein, wenn eine akustische und/oder visuelle Signalisierungsvorrichtung ausgebildet ist, welche der Bedienperson beim Vorliegen des zweiten Betriebsmodus das Nachlaufverhalten der angesteuerten Maschinenkomponente signalisiert, insbesondere zur Abgabe einer akustischen und/oder visuellen Rückmeldung über das allmähliche Verstreichen oder Ablaufen der Nachlaufzeit und/oder über die allmählich abnehmende Nachlaufgeschwindigkeit der angesteuerten Maschinenkomponente vorgesehen ist. Dadurch kann für eine Bedienperson die Klarheit der Bedienungsmaßnahmen bzw. die Nachvollziehbarkeit der teilweise automatisiert aktivierten bzw. deaktivierten Steuerungsabläufe weiter gesteigert werden. Insbesondere können dadurch kaum Missverständnisse hinsichtlich des jeweils vorliegenden Betriebsmodus auftreten. Dies vor allem dann, wenn aufgrund des zweiten Betriebsmodus ein virtueller Nachlauf aktiv ist bzw. ein Nachwirken des zuvor abgegebenen Bewegungs-Steuerbefehls vorliegt.

Insbesondere kann es zweckmäßig sein, wenn die akustische und/oder visuelle Signalisierungsvorrichtung wenigstens einen Lautsprecher und/oder wenigstens ein Anzeigemittel aufweist, welches beispielsweise eine Restdaueranzeige und/oder eine Geschwindigkeitsanzeige in Zahlen-, Balken- oder Zeigerform umfasst.

Beispielsweise durch die Abgabe von akustischen Signalisierungen, insbesondere durch abklingende Ratter-, Lauf- bzw. Rotationsgeräusche, ist für eine Bedienperson eindeutig erkennbar, dass eine steuerungstechnisch automatisch initiierte, nachlaufende Bewegung einer zuvor angesteuerten Maschinenachse soeben noch ausgeführt wird. Alternativ oder in Kombination dazu kann dies auch durch die zuvor genannten, visuell erfassbaren Signalisierungen erzielt werden. Das Abklingen bzw. Verstummen eines solchen Feedback-Geräusches und/oder das Anzeigen eines Maximal- oder Nullwertes via das optische Signalisierungs- bzw. Anzeigemittel soll dabei mit dem Zeitpunkt des automatischen Stoppens oder Auslaufens der automatisiert nachlaufenden Maschinenbewegung einhergehen.

Ferner kann vorgesehen sein, dass das Betätigungsorgan oder dessen Drehachse mit einem gesteuert veränderlichen Drehwiderstand-Generierungsmittel in mechanischer Wechselwirkung steht bzw. damit bewegungsgekoppelt ist, wobei die Auswerte- und Steuervorrichtung zur veränderlichen Einstellung von Drehwiderständen des Drehwiderstand-Generierungsmittels ausgebildet ist. Insbesondere können dadurch einer Bedienperson auch haptisch wahrnehmbare Rückmeldungen gegeben werde, durch welche die Bedienungsergonomie und/oder die Fehlersicherheit in Zusammenhang mit manuell anzusteuernden Bewegungsantrieben bzw. Maschinenachsen weiter gesteigert werden kann.

Zum besseren Verständnis der Erfindung wird diese anhand der nachfolgenden Figuren näher erläutert.

Es zeigen jeweils in stark vereinfachter, schematischer Darstellung:

Fig. 1    eine aus mehreren Maschinen, insbesondere Industrierobotern, gebildete technische Anlage und ein dabei eingesetztes, elektronisches Steuerungssystem, welches Steuerungssystem mehrere Steuervorrichtungen und eine Mensch-Maschine-Schnittstelle in Art eines tragbaren Handbediengerätes umfasst;

Fig. 2    eine Produktionsmaschine, insbesondere eine Spritzgießmaschine, welche eine elektronische Steuervorrichtung und eine daran angebundene Mensch-Maschine-Schnittstelle in Art eines stationären Bedienpanels umfasst;

Fig. 3    das Bedienpanel der Produktionsmaschine nach Fig. 2;

Fig. 4    eine Steuervorrichtung für industrielle Maschinen mit einem Drehsteller-Bedienelement, welches zur Bedienung oder Beeinflussung von Bewegungsantrieben dient;

Fig. 5    mögliche Kennlinien in Zusammenhang mit einem relativ feinfühligen Bewegen oder Positionieren einer über das Drehsteller-Bedienelement angesteuerten Maschinenkomponente;

Fig. 6    mögliche Kennlinien in Zusammenhang mit relativ weitläufigen bzw. vergleichsweise lange andauernden Verstellbewegungen einer über das Drehsteller-Bedienelement angesteuerten Maschinenkomponente.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

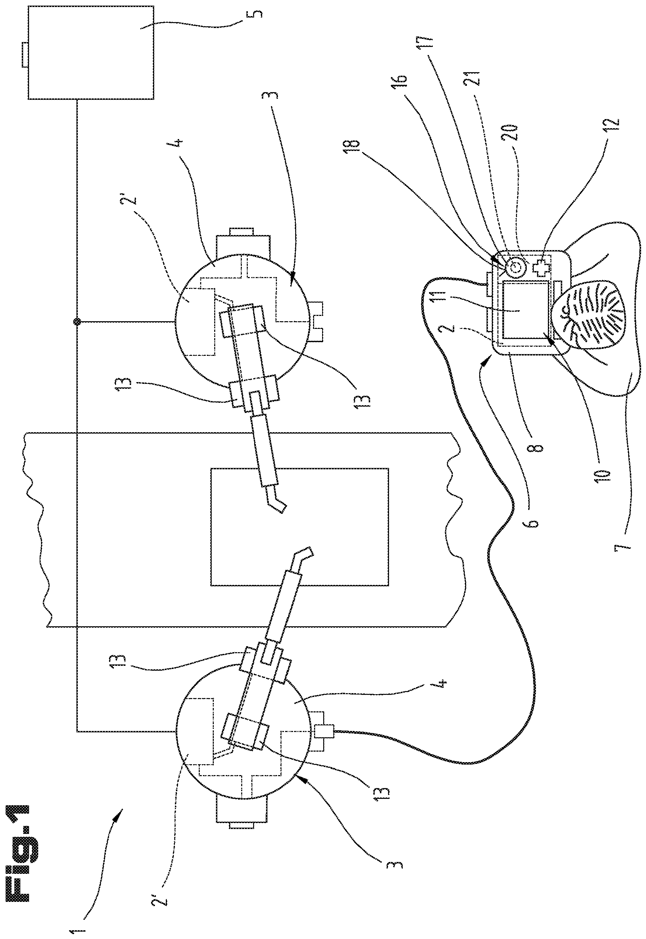

In den Fig. 1 bis 3 sind Ausführungsbeispiele von elektrotechnischen bzw. elektronischen Steuerungssystemen 1 gezeigt, die für die Automatisierung bzw. Steuerung von industriellen Anlagen eingesetzt werden können. Eine solche industrielle Anlage bzw. dessen Steuerungssystem 1 umfasst wenigstens eine elektronische Steuervorrichtung 2, 2' bzw. kann auch eine Mehrzahl von verteilt angeordneten elektronischen Steuervorrichtungen 2, 2' vorgesehen sein. Eine entsprechende Anlage umfasst zumindest eine Maschine 3 bzw. eine Mehrzahl von gegebenenfalls interagierenden Maschinen 3 bzw. Maschinenkomponenten. Die zumindest eine elektronische Steuervorrichtung 2, 2' ist vorzugsweise softwaregesteuert ausgeführt und dient primär dazu, die jeweiligen Steuerungsfunktionen der jeweiligen industriellen Maschine 3 umzusetzen bzw. die Abläufe der Maschine 3 überwachen, beeinflussen und/oder programmieren zu können.

Entsprechend der Ausführung nach Fig. 1 ist eine solche industrielle Maschine 3 durch wenigstens einen Industrieroboter 4 gebildet. Ein solcher Industrieroboter 4 kann Bestandteil einer Montage- bzw. Fertigungsanlage sein. Durch eine datentechnische Vernetzung der jeweiligen Steuervorrichtungen 2, 2' kann vorgesehen sein, dass die Industrieroboter 4 steuerungstechnisch interagieren können. Eine solche daten- bzw. steuerungstechnische Vernetzung zwischen mehreren Industrierobotern 4 kann auch einen zentralen Leitrechner 5 umfassen. Hinsichtlich einer zentralen, dezentralen, hierarchischen oder anderweitig aufgebauten Steuerungsarchitektur und Vernetzung sind dabei vielfältigste Ausführungsformen denkbar, welche entsprechend den jeweiligen Erfordernissen gewählt werden können.

Zumindest einer Steuervorrichtung 2' in zumindest einer Maschine 3 ist dabei zumindest eine Mensch-Maschine-Schnittstelle 6 (HMI) zugeordnet bzw. zuordenbar. Mittels dieser Mensch-Maschine-Schnittstelle 6 sind steuerungsrelevante Interaktionen zwischen einer Bedienperson 7 und der jeweiligen Maschine 3 ermöglicht.

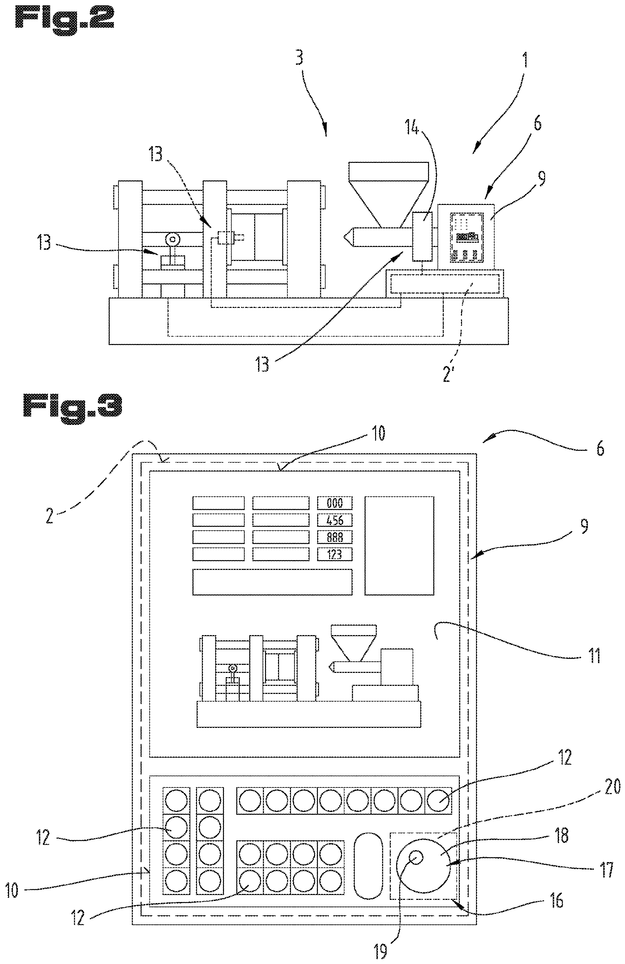

Beim Ausführungsbeispiel gemäß Fig. 1 ist die steuerungstechnische Mensch-Maschine-Schnittstelle 6 durch ein mobiles bzw. tragbares Handbediengerät 8 gebildet. Bei der Ausführungsform nach Fig. 2 ist die Mensch-Maschine-Schnittstelle 6 durch ein stationäres Bedienpanel 9 definiert. Die jeweiligen Mensch-Maschine-Schnittstellen 6 können somit auch als Bedienerschnittstellen bezeichnet werden.

Ein gattungsgemäßes Handbediengerät 8 bzw. Bedienpanel 9 weist wenigstens eine Eingabevorrichtung 10, wie zum Beispiel einen berührungssensitiven Bildschirm 11, Eingabetasten 12, Schalter, oder sonstige elektrische oder elektromechanische Eingabemittel auf. Zudem können visuell und/oder akustisch erfassbare Ausgabemittel vorgesehen sein. Bei einem gattungsgemäßen Handbediengerät 8 bzw. Bedienpanel 9 können insbesondere der zuvor erwähnte berührungssensitive Bildschirm 11, sowie Leuchtelemente bzw. Signalisierungslampen zur Anzeige von systemrelevanten Daten bzw. Zuständen vorgesehen sein. Der Funktionsumfang und die Ausführungsform der jeweiligen Eingabevorrichtung bzw. der jeweiligen Ausgabevorrichtung hängen dabei stark von der jeweiligen Anwendung, insbesondere von der technischen Komplexität der zu steuernden Maschine 3 bzw. Anlage ab. Wesentlich ist dabei, dass die Bedienperson 7 mittels der Eingabevorrichtung 10 und einer geeigneten Ausgabevorrichtung, insbesondere mittels dem zuvor genannten berührungssensitiven Bildschirm 11, die benötigten steuerungstechnischen Abläufe kontrollieren bzw. überwachen, beeinflussen und/oder programmieren kann.

Die in der Mensch-Maschine-Schnittstelle 6, insbesondere im Handbediengerät 8 bzw. im Bedienpanel 9 ausgeführte Steuervorrichtung 2 und die einer Maschine 3 zugeordnete Steuervorrichtung 2' können dabei über kabelgebundene und/oder drahtlos ausgeführte Kommunikationsschnittstellen in datentechnischer bzw. steuerungstechnischer Wechselwirkung stehen.

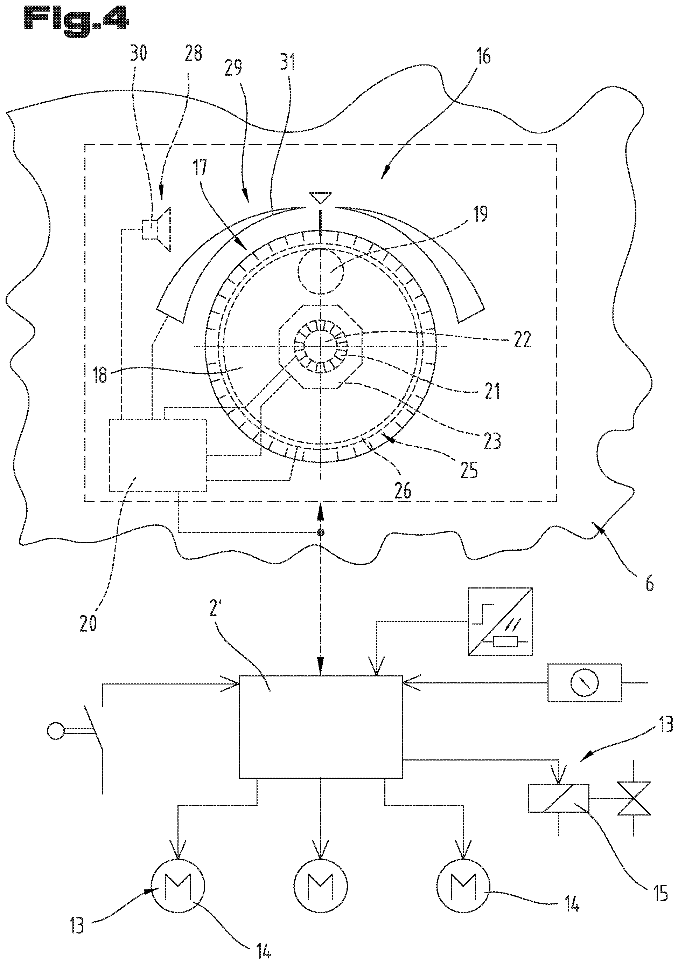

Wie an sich bekannt, sind zur Automatisierung der jeweiligen Maschinen 3 steuerbare, insbesondere wenigstens aktivier- und deaktivierbare Bewegungsantriebe 13 vorgesehen, welche mit der jeweiligen Steuervorrichtung 2' leitungsverbunden sind. Häufig sind solche Bewegungsantriebe 13 auch hinsichtlich ihrer Antriebsgeschwindigkeit und/oder Antriebsleistung bzw. Antriebskraft bedarfsabhängig einstell- bzw. veränderbar. Derartige Bewegungsantriebe 13 können, wie in Fig. 2 bzw. Fig. 4 veranschaulicht, durch Motoren 14, durch Hydraulikzylinder, durch Proportional-Magnetventile 15, oder durch sonstige Elemente zur aktiven bzw. steuerbaren Bewegung von Maschinenkomponenten gebildet sein. Unter den entsprechenden Bewegungsantrieben 13 sind auch Aktoren zu verstehen, mit welchen eine Verstellbewegung einer Maschinenkomponente erzeugt bzw. eingeleitet werden kann. Ein solcher Bewegungsantrieb 13 und die jeweilige Maschinenkomponente können dabei auch als Maschinenachse bezeichnet werden. Unter einer steuerbaren Maschinenkomponente bzw. Maschinenachse kann zum Beispiel ein Gelenksarm eines Industrieroboters 4, eine Vorschubeinheit, ein Bearbeitungsaggregat einer Werkzeugmaschine, ein Stellantrieb einer Produktionsmaschine, und dergleichen verstanden werden. An eine solche Maschinen-Steuervorrichtung 2' können typischerweise auch eine Mehrzahl von Sensoren, Endschalter und/oder Geber angeschlossen sein, wie dies allgemein bekannt ist und in Fig. 4 beispielhaft gezeigt ist. Dadurch können Bewegungs- bzw. Funktionsabläufe der jeweiligen Maschine vollautomatisch oder zumindest teilautomatisch ausgeführt werden bzw. automatisiert überwacht werden.

Zur manuellen Beeinflussung bzw. zur Programmierung der jeweiligen Bewegungsantriebe 13 bzw. Maschinenkomponenten ist an der jeweiligen Mensch-Maschine-Schnittstelle 6 zumindest ein Bedienelement 16 zur manuellen Beeinflussung oder Vorgabe von Verstellbewegungen von zumindest einer der Maschinenkomponenten bzw. Maschinenachsen vorgesehen. Diese manuelle Beeinflussung oder Vorgabe von Verstellbewegungen durch eine Bedienperson 7 umfasst vorzugsweise die Möglichkeit einer Geschwindigkeits- und/oder Leistungsveränderung des anzusteuernden bzw. selektiv ansteuerbaren Bewegungsantriebes 13. Zudem können Bedienelemente, insbesondere Tast- oder Schaltelemente, ausgeführt sein, welche zur Aktivierung und Deaktivierung eines ausgewählten bzw. ansteuerbaren Bewegungsantriebes 13 vorgesehen sind.

Zumindest eines der Bedienelemente 16 an der Mensch-Maschine-Schnittstelle 6 ist dabei als Drehsteller-Bedienelement 17 mit einem endlos bzw. anschlaglos verdrehbaren Betätigungsorgan 18 ausgeführt. Endlose Verdrehbarkeit bedeutet dabei, dass das Drehsteller-Bedienelement 17 bzw. dessen Betätigungsorgan 18 derart ausgeführt ist, dass es keine mechanischen Endanschläge bzw. keine dauerhafte Begrenzung hinsichtlich der Drehbeweglichkeit des Betätigungsorgans 18 gibt. Dies im Unterschied zu einem typischen Potentiometer bzw. einstellbaren, ohmschen Widerstand, bei welchem ein Verdreh- bzw. Einstellbereich von üblicherweise etwa 270° gegeben ist. Das anspruchsgemäße Drehsteller-Bedienelement 17 ist vielmehr mit einem sogenannten Override-Potentiometer vergleichbar bzw. kann das Drehsteller-Bedienelement 17 als endlos drehbeweglicher Inkrementalgeber ausgeführt sein. Vorteilhaft ist es dabei, wenn das Drehsteller-Bedienelement 17 eine endlose Rotierbarkeit seines beispielsweise scheiben- oder radförmigen Betätigungsorgans 18 bzw. eine damit einhergehende, unbegrenzte Abgabe von Sensorimpulsen bzw. Inkrementen ermöglicht.

Das Drehsteller-Bedienelement 17 am Handbediengerät 8 (Fig. 1) bzw. am Bedienpanel 9 (Fig. 3) kann in einem gegebenenfalls implementierten, bedarfsweise aktivierbaren Betriebsmodus auch nur eine reine Schaltfunktion für zumindest einen der Bewegungsantriebe 13 aufweisen. Die Schaltfunktion des Drehsteller-Bedienelementes 17 kann dabei als Rast-Schalfunktion und/oder als Tast-Schalfunktion umgesetzt sein.

Optional kann das Betätigungsorgan 18 wenigstens eine Markierung 19 umfassen, mit welcher einer Bedienperson 7 die jeweilige Drehwinkelstellung des Betätigungsorgans 18 angezeigt werden kann. Eine solche Markierung 19 am vorzugsweise endlos verdrehbaren bzw. anschlaglos rotierbaren Betätigungsorgan 18 ist jedoch nicht zwingend.

Das Drehsteller-Bedienelement 17 ist mit einer elektronischen Auswerte- und Steuervorrichtung 20 verbunden bzw. kann eine solche Auswerte- und Steuervorrichtung 20 ein Bestandteil des Drehsteller-Bedienelementes 17 sein. Insbesondere sind Signale bzw. Betätigungszustände des Drehsteller-Bedienelementes 17 durch die Auswerte- und Steuervorrichtung 20 erfass- und evaluierbar.

Die Auswerte- und Steuervorrichtung 20 kann dabei als eigenständige bzw. separate Einheit ausgeführt sein, oder aber durch die Steuervorrichtung 2, 2' umgesetzt werden. Insbesondere kann die Steuervorrichtung 2, 2' zumindest Teilaufgaben der Auswerte- und Steuervorrichtung 20 übernehmen. Dies vor allem deshalb, weil die Funktionalitäten der Auswerte- und Steuervorrichtung 20 überwiegend softwaretechnisch bzw. programmtechnisch realisierbar sind und daher in einfacher Art und Weise einen Funktionsumfang der Steuervorrichtung 2, 2' darstellen können. Es ist somit auch ein kombinatorisches Zusammenwirken möglich, um eine Umsetzung der Auswerte- und Steuervorrichtung 20 zu erzielen. Die Auswerte- und Steuervorrichtung 20 kann aber auch - wie vorstehend beschrieben - integraler Bestandteil des Drehsteller-Bedienelementes 17 sein.

Das Drehsteller-Bedienelement 17 umfasst wenigstens ein sensortechnisches Erfassungsmittel 21 zur Ermittlung der von einer Bedienperson 7 jeweils vorgenommenen Drehbetätigungen gegenüber dem Betätigungsorgan 18. Insbesondere ist es möglich, via das sensortechnische Erfassungsmittel 21 zumindest den zurückgelegten Drehwinkel, also die Winkeländerung, und die Drehrichtung des Betätigungsorgans 18 zu detektieren. Als sensortechnisches Erfassungsmittel 21 eignen sich vorzugsweise Inkrementalgeber oder auch Absolutwertgeber, welche mit der Auswerte- und Steuervorrichtung 20 leitungsverbunden sind und so die jeweiligen Sensorsignale bzw. Werte zur weiteren Verarbeitung bzw. Auswertung bereitstellen. Insbesondere kann via die Auswerte- und Steuervorrichtung 20 das von der Bedienperson 7 gegenüber dem Betätigungsorgan 18 ausgeübte Bedienverhalten ermittelt werden. Das Bedienverhalten umfasst dabei Parameter wie Drehrichtung, Drehwinkel, Drehgeschwindigkeit, Betätigungs- bzw. Drehverlauf, Winkelbeschleunigung und dergleichen. Daraus folgt, dass die von einer Bedienperson 7 am Betätigungsorgan 18 respektive gegenüber seiner Drehachse 22 ausgeübten Drehbewegungen von der elektronischen Auswerte- und Steuervorrichtung 20 evaluiert werden und daraus entsprechende Steuerbefehle für die angesteuerte Maschine 3 bzw. Maschinenkomponente abgeleitet werden.

Das Betätigungsorgan 18 oder dessen Drehachse 22 kann auch mit einem gesteuert veränderlichen Drehwiderstand-Generierungsmittel 23 in mechanischer Wechselwirkung stehen bzw. damit bewegungsgekoppelt sein. Die Auswerte- und Steuervorrichtung 20 ist dabei mit dem Drehwiderstand-Generierungsmittel 23 leitungsverbunden und zur gesteuert veränderlichen Einstellung von Drehwiderständen des Drehwiderstand-Generierungsmittels 23 ausgebildet. Das Drehwiderstand-Generierungsmittel 23 kann dabei eine elektrorheologische oder magnetorheologische Flüssigkeit umfassen, deren Viskosität durch Einwirkung elektrischer Energie in Form von elektrischen oder elektromagnetischen Feldern beeinflussbar ist. Dadurch kann der Bedienperson 7 in steuerungstechnisch einfacher und zuverlässiger Art und Weise ein variantenreiches bzw. situationsgerecht anpassbares, haptisches Feedback in Zusammenhang mit der Bedienung des Betätigungsorgans 18 gegeben werden. Ein derartiges Feedback kann Raststufen und/oder gesteuert variierende Betätigungs- bzw. Verdrehwiderstände umfassen.

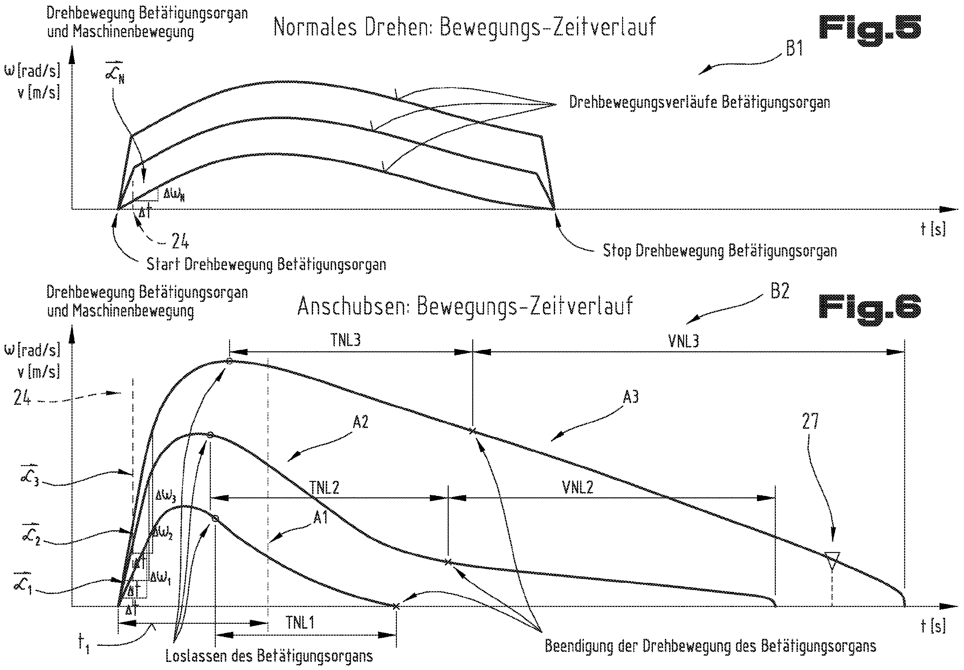

Die zumindest teilweise softwaretechnisch umgesetzte Auswerte- und Steuervorrichtung 20 ist zur Bereitstellung bzw. zur automatischen Unterscheidung und wahlweisen Aktivierung zumindest eines ersten und eines zweiten Betriebsmodus B1, B2 des Drehsteller-Bedienelementes 17 bzw. der Steuervorrichtung 2, 2' vorgesehen. Ein beispielhaftes Verhalten des Drehsteller-Bedienelementes 17 im ersten Betriebsmodus B1 ist in Fig. 5 schematisch veranschaulicht, während ein beispielhaftes Verhalten des Drehsteller-Bedienelementes 17 im zweiten Betriebsmodus B2 in Fig. 6 schematisch gezeigt ist.

Fig. 5 zeigt dabei einen möglichen Bewegungs-Zeitverlauf beim normalen bzw. standardmäßigen Drehen des Betätigungsorgans 18. Insbesondere sind in diesem Diagramm drei mögliche Drehbewegungsverläufe des Betätigungsorgans 18 in Korrelation zu den daraus resultierenden Maschinenbewegungen dargestellt. Die Drehbewegungen am Betätigungsorgan 18 sind dabei in proportionale Steuerbefehle bzw. Verfahrbewegungen der angesteuerten Maschinenkomponente umgesetzt. Insbesondere erfolgt eine Stell- bzw. Verfahrbewegung der angesteuerten Maschinenkomponente nur so lange, so lange auch das Betätigungsorgan 18 betätigt wird bzw. durch die Bedienperson aktiv verdreht wird. Unmittelbar beim Beenden der Drehbetätigung gegenüber dem Betätigungsorgan 18 und dem damit einhergehenden unmittelbaren Stoppen der Drehbewegung des Betätigungsorgans 18 stoppt auch die Verstellbewegung der angesteuerten Maschinenkomponente möglichst zeitgleich bzw. mit vernachlässigbarer Verzögerung, welche beispielsweise durch physikalische Trägheiten bzw. steuerungstechnische Rechenzeiten bedingt sein kann. Die Bedienperson kann dadurch die Bewegungsgeschwindigkeit und die jeweils zurückgelegte Bewegungsstrecke der Maschinenkomponente gut kontrollieren. Dieser Betriebsmodus B1 ist insbesondere zum feinfühligen Bewegen einer angesteuerten Maschinenkomponente praktikabel und/oder besonders zweckmäßig, wenn nur mehr relativ kurze Stellwege bis zum Erreichen der Soll- bzw. Wunschposition zurückzulegen sind.

In diesem ersten Betriebsmodus B1, welcher auch als Proportional-Steuerungsbetrieb bezeichnet werden kann, können auch unterschiedliche Bewegungs-Skalierungen bzw. Umsetzungsverhältnisse zwischen der Drehbewegung des Betätigungsorgans 18 und der Stellbewegung der angesteuerten Maschinenkomponente vorgesehen sein. So ist beispielsweise bei der untersten Kennlinie in Fig. 5 das Verhältnis zwischen der Drehbewegung des Betätigungsorgans 18 und der daraus resultierenden Maschinenbewegung 1:1, während dieses Verhältnis bei der mittleren Kennlinie 1:2 und bei der obersten der dargestellten Kennlinien 1:3 beträgt. Diese optional implementierten Skalierungen bzw. Umsetzungsverhältnisse sind dabei durch die Bedienperson auswähl- und voreinstellbar bzw. je nach Bedarf umstellbar. Ein eventueller Einstellbereich kann dabei in einem Wertebereich zwischen 1:1 und 1:10 oder mehr liegen, wobei diese Verhältnisse zwischen der Drehung am Betätigungsorgan 18 und der resultierenden Bewegung der Maschinenkomponente stark von der jeweiligen Anwendung bzw. Maschine abhängig sein können, insbesondere vom jeweils zurückzulegenden Stellweg, der erreichbaren Stellgeschwindigkeit und/oder dem jeweiligen Stellantrieb mitbeeinflusst sein können.

Im ersten Betriebsmodus B1 tritt also kein Nachlaufen des Betätigungsorgans 18 nach dem Loslassen des Betätigungsorgans 18 auf. Insbesondere kann das Rast- bzw. Bremsmoment des Drehsteller-Betätigungselements 17 bzw. von dessen Drehachse 22 entsprechend hoch sein. Dies kann in praktikabler Art und Weise via das Drehwiderstand-Generierungsmittel 23 - Fig. 4 - eingestellt bzw. bestimmt oder mitbestimmt werden. Es ist aber auch möglich, dass das standardmäßig vorhandene bzw. das durch den mechanischen Aufbau des Drehsteller-Bedienelementes 17 bedingte Rast- bzw. Bremsmoment gegenüber der Drehachse 22 derart hoch ist, dass bei relativ langsamen, standardmäßigen bzw. feinfühligen Drehbewegungen gegenüber dem Betätigungsorgan 18 ein Nachlaufen desselben nicht auftritt bzw. nicht auftreten kann. Es ist in diesem Zusammenhang auch üblich, dass die Bedienperson beim "normalen" bzw. standardmäßigen Drehen am Betätigungsorgan 18, wie es beim feinfühligen Positionieren der angesteuerten Maschinenkomponente angewandt wird, ein Stoppen bzw. Beenden der Drehung des Betätigungsorgans 18 typischerweise durch die Hand bzw. die Finger der Bedienperson erfolgt.

Insbesondere wird im ersten Betriebsmodus B1 das Betätigungsorgan 18 durch die Bedienperson in der Regel aktiv verzögert bzw. aktiv in den Stillstand versetzt, wodurch aufgrund des Proportional-Steuerverhaltens im ersten Betriebsmodus B1 zeitgleich oder annähernd zeitgleich auch die Bewegung der angesteuerten Maschinenkomponente verzögert bzw. in den Stillstand versetzt wird, wie dies den Kennlinienverläufen in Fig. 5 zu entnehmen ist.

Der erste Betriebsmodus B1 ist im Wesentlichen dadurch charakterisiert und von der Auswerte- und Steuervorrichtung 20 daran erkennbar, dass zumindest anfänglich bzw. initial ein relativ langsames Verdrehen bzw. "Hochdrehen" des Betätigungsorgans 18 durch die Bedienperson vorgenommen wird bzw. im Vergleich zu den Kennlinien in Fig. 6 - betreffend den zweiten Betriebsmodus B2 - eine relativ geringe initiale Winkelbeschleunigung $\vec{a}_N$ am Betätigungsorgan 18 auftritt bzw. an dessen Drehachse 22 vorliegt. Die Auswerte- und Steuervorrichtung 20 kann dies beispielsweise anhand der Anzahl der Inkremente bzw. Sensorimpulse pro Zeiteinheit ermitteln, welche vom sensorischen Erfassungsmittel 21 - Fig. 4 - erzeugt werden. Die Winkelbeschleunigung $\vec{a}_N$ ist durch die zeitliche Änderung der Winkelgeschwindigkeit ω des Betätigungsorgans 18 bzw. seiner Drehachse 22 definiert, sodass $\vec{a}_N = \Delta\omega / \Delta t$ gilt.

Alternativ oder in Kombination dazu kann auch die zu einem vorbestimmten, initialen Zeitpunkt vorliegende Winkelgeschwindigkeit ω des Betätigungsorgans 18 respektive seiner Drehachse 22 als Kriterium für das Aktivieren des Betriebsmodus B1 oder B2 herangezogen werden bzw. als Kriterium für eine Umschaltung zwischen den beiden Betriebsmodi B1 und B2 - und umgekehrt - fungieren. Insbesondere kann vorgesehen sein, dass die in der Anfangsphase der Einleitung einer Drehbewegung vorliegende Winkelgeschwindigkeit ω des Betätigungsorgans 18 als Kriterium für die Aktivierung des ersten oder zweiten Betriebsmodus B1, B2 herangezogen wird. Die Anfangsphase kann dabei durch einen Evaluierungszeitpunkt 24 - Fig. 5, 6 - definiert bzw. begrenzt sein. Der Evaluierungszeitpunkt 24 kann beispielsweise bis zu etwa 0,5s nach dem Start der Drehbewegung des Betätigungsorgans 18 respektive seiner Drehachse 22 liegen, oder zu einem anderen praktikablen Zeitpunkt definiert sein. Insbesondere kann eine Umschaltung in den zweiten Betriebsmodus B2 erfolgen, wenn ein vordefinierter Schwellwert der Dreh- bzw. Winkelgeschwindigkeit ω des Betätigungsorgans 18 zum Evaluierungszeitpunkt 24 bzw. während einer vordefinierten Evaluierungsphase einen vordefinierten Wert erreicht oder überschritten hat. Der entsprechende Winkelgeschwindigkeits- bzw. Winkelbeschleunigungs-Schwellwert kann demzufolge als Dynamickennwert der Drehbewegung des Betätigungselements 18 verstanden werden, wie dies auch einer Zusammenschau der Fig. 5 und 6 zu entnehmen ist.

Wird von der Auswerte- und Steuervorrichtung 20 detektiert, dass die Winkelbeschleunigung $\vec{a}_N$ bzw. die Winkelgeschwindigkeit ω des Betätigungsorgans 18 respektive seiner Drehachse 22 am Beginn bzw. in der Anfangsphase der Einleitung einer Drehbewegung am Betätigungsorgan 18 einen vordefinierten Schwellwert bzw. einen dementsprechenden Dynamikkennwert erreicht oder überschreitet, so wird vorzugsweise automatisch in den zweiten Betriebsmodus B2 umgeschaltet bzw. liegt dann ein Kriterium vor, den zweiten Betriebsmodus B2 zu aktivieren bzw. das Drehsteller-Bedienelement 17 im zweiten Betriebsmodus B2 zu betreiben. Die Anfangsphase der Einleitung einer Drehbewegung am Betätigungsorgan 18 kann beispielsweise durch eine Zeitdauer von bis zu 1 Sekunde, vorzugsweise von bis zu 0,5 Sekunden ab dem Start der Drehbewegung des Betätigungsorgans 18 definiert sein.

Eine zweckmäßiges Evaluierungskriterium für einen automatischen Ein- bzw. Umschaltvorgang in Bezug auf die zumindest zwei Betriebsmodi B1, B2 ist also dadurch definiert, dass ein Vergleich von wenigstens einem sensortechnisch erfassten, initialen Winkelgeschwindigkeits- bzw. Winkelbeschleunigungskennwert des Betätigungsorgans 18 mit wenigstens einem vordefinierten Schwell- bzw. Grenzwert der Winkelgeschwindigkeit bzw. Winkelbeschleunigung des Betätigungsorgans 18 vorgenommen wird. Insbesondere ist dadurch seitens der Auswerte- und Steuervorrichtung 20 automatisiert erkenn- bzw. bestimmbar, ob die Bedienperson ein Nachlaufverhalten der Maschinenbewegung wünscht, wenn das Betätigungsorgan 18 nach einem Betätigungsimpuls wieder zum Stillstand kommt (zweiter Betriebsmodus B2) bzw. ob ein solches Nachlaufverhalten der Maschinenbewegung nicht beabsichtigt bzw. gewünscht ist (erster Betriebsmodus B1).

Die Auswerte- und Steuervorrichtung 20 kann entsprechend einer zweckmäßigen Weiterbildung auch dazu ausgebildet sein, den zweiten Betriebsmodus B2 einzuleiten oder darauf umzuschalten, wenn zusätzlich mittels einem Berührungs- oder Ergreifungserkennungsmittel 25 (Fig. 4), beispielsweise mittels einem kapazitiven Sensor 26 (Fig. 4), detektiert wird, dass das Betätigungsorgan 18 von der Bedienperson losgelassen wurde. Gemäß der Darstellung in Fig. 4 kann das Berührungs- oder Ergreifungserkennungsmittel 25 bzw. der kapazitive Sensor 26 dem Betätigungsorgan 18 unmittelbar zugeordnet und mit der elektronischen Auswerte- und Steuervorrichtung 20 leitungsverbunden sein. Es ist aber auch möglich, die entsprechenden Erfassungsmittel einer feststehenden Begrenzungsfläche der Mensch-Maschine-Schnittstelle 6 zuzuordnen bzw. Erfassungsmittel basierend auf dem drucksensitiven oder resistiven Prinzip einzusetzen. Beispielhafte Zeitpunkte des Loslassens des Betätigungsorgans 18 durch die Bedienperson sind in Fig. 6 durch Kreissymbole veranschaulicht worden.

In Fig. 6 sind drei beispielhafte Kennlinien von verschiedenen Bewegungsverläufen des Betätigungsorgans 18 und von daraus abgeleiteten bzw. resultierenden Bewegungsverläufen der angesteuerten Maschinenkomponente gezeigt. In diesem zweiten Betriebsmodus B2 wird die Betätigungsart des Drehsteller-Bedienelementes 17 bzw. von dessen Betätigungsorgan 18 als "Anschubsen" erkannt bzw. verwertet. Anstelle von "Anschubsen" kann auch die synonyme Bezeichnung "Anschucken" verwendet werden.

Der beispielhaften Anschubs-Kennlinie A1 in Fig. 6 liegt eine initiale Winkelbeschleunigung $\vec{a}_1$ bzw. eine initiale Winkelgeschwindigkeit $\omega_1$ des Betätigungsorgans 18 zugrunde, welche ein tatsächliches Nachlaufen des Betätigungsorgans 18 während einer Nachlaufzeit TNL1 bewirkt. Diese Nachlaufzeit TNL1 ist hauptsächlich durch den zuvor aufgebrachten Betätigungsimpuls gegenüber dem Betätigungsorgan 18 und durch das vorherrschende Rast- bzw. Bremsmoment gegenüber dessen Drehachse 22 bestimmt. Der jeweilige Betätigungsimpuls von Seiten der Bedienperson resultiert in einer entsprechenden Winkelgeschwindigkeit $\omega_1$ und Winkelbeschleunigung $\vec{a}_1$ des Betätigungsorgans 18. Eine Maschinenbewegung wird entsprechend der Anschubs-Kennlinie A1 nur so lange ausgeführt, solange das Betätigungsorgan 18 aufgrund des aufgebrachten Betätigungsimpulses nachläuft, nachdem die Bedienperson das Betätigungsorgan 18 nicht mehr berührt. Demnach tritt bei der Beendigung der Drehbewegung des Betätigungsorgans 18 auch eine Beendigung der Maschinenbewegung ein.

Das Nachlaufverhalten bzw. die tatsächliche Nachlaufzeit TNL1 des Betätigungsorgans 18 kann gegebenenfalls von der Auswerte- und Steuervorrichtung 20 mittels dem Drehwiderstand-Generierungsmittel 23 - Fig. 4 - beeinflusst werden. Es ist aber auch möglich, dass das Nachlaufverhalten bzw. die tatsächliche Nachlaufzeit TNL1 des Betätigungsorgans 18 nur durch mechanischen Eigenschaften des Drehsteller-Bedienelementes 17, insbesondere durch die Massenträgheit des Betätigungsorgans 18 bzw. durch die Reibungswerte von dessen Drehachse 22 bestimmt ist. Der Zeitpunkt des Loslassen des Betätigungsorgans 18 durch die Bedienperson ist dabei durch ein Kreissymbol auf der Anschubs-Kennlinie A1 beispielhaft veranschaulicht. Der Endzeitpunkt des Nachlaufs des Betätigungsorgans 18 und der zeitgleiche Stopp der Bewegung der angesteuerten Maschinenkomponente ist durch ein Kreuzsymbol auf der Zeitachse dargestellt.

Der Anschubs-Kennlinie A2 liegt eine initiale Winkelbeschleunigung $\vec{a}_2$ bzw. eine initiale Winkelgeschwindigkeit $\omega_2$ des Betätigungsorgans 18 zugrunde, welche höher ist als bei der Anschubs-Kennlinie A1. Demnach kann die tatsächliche Nachlaufzeit TNL2 des Betätigungsorgans zumindest geringfügig länger sein, als die Nachlaufzeit TNL1. Hierbei ist jedoch die Verstellbewegung der angesteuerten Maschinenkomponente ohne Unterbrechung während einer virtuellen Nachlaufzeit VNL2 steuerungstechnisch fortgesetzt. Das heißt, dass die Maschinenbewegung entsprechend der Anschubs-Kennlinie 2 steuerungstechnisch aktiv fortgesetzt wird, obwohl das Betätigungsorgan 18 zum beispielhaften Zeitpunkt mit dem Kreuzsymbol bereits zum Stillstand gekommen ist. Mit anderen Worten ausgedrückt, bewegt sich die angesteuerte Maschinenkomponente gemäß einem definierten, beispielsweise allmählich abklingenden, Bewegungsprofil weiter, während das Betätigungsorgan 18 und dessen Drehachse 22 bereits zum Stillstand gekommen sind. Das Verhalten gemäß der Anschubs-Kennlinie A2 wird von der Auswerte- und Steuervorrichtung 20 aufgrund einer relativ hohen initialen Winkelbeschleunigung $\vec{a}_2$ bzw. Winkelgeschwindigkeit $\omega_2$ des Betätigungsorgans 18 respektive von dessen Drehachse 22 initiiert bzw. automatisch umgesetzt.

Bei der Anschubs-Kennlinie A3 liegt eine initiale Winkelbeschleunigung $\vec{a}_3$ bzw. eine initiale Winkelgeschwindigkeit $\omega_3$ des Betätigungsorgans 18 vor, welche jeweils höher ist als bei den Anschubs-Kennlinien A1 und A2. Die tatsächliche Nachlaufzeit TNL3 des Betätigungsorgans 18 kann dadurch zumindest geringfügig länger ausfallen als die tatsächliche Nachlaufzeit TNL2. Aufgrund des relativ hohen Beschleunigungs- bzw. Dynamikkennwertes betreffend die initiale Drehbewegungsphase des Betätigungsorgans 18 kann jedoch die virtuelle Nachlaufzeit VNL3 und/oder die Nachlaufgeschwindigkeit seitens der Auswerte- und Steuervorrichtung 20 deutlich länger bzw. höher angesetzt werden, als dies zum Beispiel bei der virtuellen Nachlaufzeit VNL2 vorliegt bzw. angewandt wird. Insbesondere ist anhand der relativ hohen initialen Winkelbeschleunigung $\vec{a}_3$ bzw. Winkelgeschwindigkeit $\omega_3$ des Betätigungsorgans 18 von der Auswerte- und Steuervorrichtung 20 ableitbar, dass die Bedienperson eine möglichst lange Nachlaufzeit, welche sich aus der tatsächlichen Nachlaufzeit TNL3 und der virtuellen Nachlaufzeit VNL3 des Betätigungsorgans 18 ergeben kann, erwirken möchte. Durch die angegebenen Maßnahmen können in effizienter Art und Weise dynamisch skalierbare, steuerungstechnisch bestimmte bzw. aktiv gesteuerte Nachlaufverhalten von Maschinenbewegungen erzielt werden, welche die Bedienungsergonomie verbessern und außerdem die Wirtschaftlichkeit der Steuervorrichtung 2, 2' steigern können.

Abweichend von den beispielhaften Darstellungen in Fig. 6 ist es auch möglich, dass das Betätigungsorgan 18 bzw. dessen Drehachse 22 keinen physischen Nachlauf hat bzw. tatsächlich gar keinen Nachlaufverhalten nach dem Loslassen des Bedienelementes 18 durch die Bedienperson aufweist. Die Zeitdauern TNL1, TNL2 und TNL3 in Fig. 6 können somit auch Null sein bzw. gar nicht vorhanden sein. Insbesondere kann das auf die Drehachse 22 bzw. auf das Betätigungsorgan 18 einwirkende Rast- bzw. Bremsmoment derart hoch sein, dass das Betätigungsorgan 18 sofort bzw. ohne nennenswerte Verzögerung nach dem Loslassen durch die Bedienperson zum Stillstand kommt. Trotzdem können die vorhergehend beschriebenen Kriterien, insbesondere die zuvor dargelegten Winkelgeschwindigkeits- bzw. Winkelbeschleunigungskennwerte, in Zusammenhang mit der Bestimmung bzw. Einleitung der virtuellen Nachlaufzeiten VNL2, VNL3 der angesteuerten Maschinenkomponente angewandt werden. Das relativ hohe Brems- bzw. Rastmoment des Betätigungsorgans 18 respektive von dessen Drehachse 22 kann dabei inhärent vorliegen bzw. mechanisch vordefiniert sein, oder durch das steuerbare Drehwiderstand-Generierungsmittel 23 bedarfsgerecht erzeugt bzw. variiert werden.

Die Auswerte- und Steuervorrichtung 20 kann auch derart ausgeführt sein, dass der zweite Betriebsmodus B2 beendet und eine aktuell ausgeführte Verstellbewegung einer angesteuerten Maschinenkomponente umgehend gestoppt wird, wenn mittels einem Berührungs- oder Ergreifungserkennungsmittel 25 (Fig. 4), beispielsweise mittels einem kapazitiven Sensor 26 (Fig. 4), detektiert wird, dass das Betätigungsorgan 18 während dem Vorliegen des zweiten Betriebsmodus B2 von der Bedienperson wieder ergriffen und von der Bedienperson daraufhin keine Drehbetätigung eingeleitet wurde, oder von der Bedienperson eine Drehbetätigung des Betätigungsorgans 18 in die Gegenrichtung eingeleitet wurde. Der zweite Betriebsmodus B2 kann aber auch dadurch beendet und eine aktuell ausgeführte Verstellbewegung einer angesteuerten Maschinenkomponente umgehend gestoppt werden, indem während dem Vorliegen des zweiten Betriebsmodus B2 von der Bedienperson eine Drehbetätigung des Betätigungsorgans 18 in die Gegenrichtung eingeleitet wird. Darüber hinaus ist es möglich, dass der zweite Betriebsmodus B2 beendet und eine aktuell ausgeführte Verstellbewegung einer angesteuerten Maschinenkomponente umgehend gestoppt wird, wenn das Betätigungsorgan 18 seitens der Bedienperson in Axialrichtung seiner Drehachse 22 mit einem Mindestwert einer Axialkraft beaufschlagt wird, oder in Axialrichtung seiner Drehachse 22 verstellt, insbesondere hineingedrückt, wird. Ein durch die vorhergehend beschriebenen Maßnahmen von einer Bedienperson bei Bedarf einleitbarer Abbruchzeitpunkt 27 einer steuerungstechnisch aktivierten, nachlaufenden Maschinenbewegung, insbesondere innerhalb der virtuellen Nachlaufzeit VNL3 gemäß der Anschubs-Kennlinie A3, ist in Fig. 6 anhand eines Dreieck-Symbols veranschaulicht worden.

Wie in Fig. 6 ebenso veranschaulicht, kann die Auswerte- und Steuervorrichtung 20 auch dazu ausgebildet sein, eine Nachlaufzeit VNL2, VNL3 oder ein Nachlaufverhalten, beispielsweise einen Geschwindigkeitsverlauf, der Verstellbewegung der angesteuerten Maschinenkomponente zumindest einmal oder mehrmals zu erhöhen, wenn die erfasste Winkelgeschwindigkeit $\omega 2$, $\omega 3$ oder Winkelbeschleunigung $\vec{a}_2$, $\vec{a}_3$ des Betätigungsorgans 18 oder seiner Drehachse 22 zumindest einen vordefinierten Schwellwert innerhalb einer vordefinierten Bewertungszeitspanne $t_1$ zwei-mal oder mehrmals erreicht oder überschreitet. Die vordefinierte Bewertungszeitspanne $t_1$ kann dabei durch eine erneute Drehbetätigung des Betätigungsorgans 18 vor dem Eintreten von dessen Stillstand, oder durch eine erneute Drehbetätigung des Betätigungsorgans 18 innerhalb von weniger als 2 Sekunden, vorzugsweise weniger als 1 Sekunde, nach einem Loslassen des Betätigungsorgans 18 durch die Bedienperson definiert sein.

Wie in Fig. 4 veranschaulicht, kann die Mensch-Maschine-Schnittstelle 6 oder die Steuervorrichtung 2, 2', insbesondere das Drehsteller-Bedienelement 17 bzw. deren Auswerte- und Steuervorrichtung 20 auch mit einer akustischen und/oder visuellen Signalisierungsvorrichtung 28, 29 ausgestattet bzw. leitungsverbunden sein. Die akustische und/oder visuelle Signalisierungsvorrichtung 28, 29 dient dazu, der Bedienperson beim Vorliegen des zweiten Betriebsmodus B2 das Vorliegen einer aktiven Nachlaufphase bzw. das jeweilige Nachlaufverhalten der angesteuerten Maschinenkomponente zu signalisieren. Dies ist insbesondere beim Vorliegen bzw. steuerungstechnischen Aktivieren von virtuellen Nachlaufzeiten VNL2, VNL3 zweckmäßig, da hierbei das Betätigungsorgan 18 stillsteht und trotzdem eine typischerweise abklingende, nachlaufende Verstellbewegung der entsprechend angesteuerten Maschinenkomponente vorliegt.

Die akustische und/oder visuelle Signalisierungsvorrichtung 28, 29 kann dabei zur Abgabe einer akustischen und/oder visuellen Rückmeldung über das allmähliche Verstreichen oder Ablaufen der tatsächlichen und/oder virtuellen Nachlaufzeit TNL1, TNL2, TNL3, VNL2, VNL3 und/oder über die allmählich abnehmende Nachlaufgeschwindigkeit der angesteuerten Maschinenkomponente vorgesehen sein. Die akustische Signalisierungsvorrichtung 28 kann hierfür wenigstens einen Summer oder Lautsprecher 30 umfassen. Die visuelle Signalisierungsvorrichtung 29 kann hierfür wenigstens ein Display bzw. ein Anzeigemittel 31, beispielsweise eine Restdaueranzeige und/oder eine Geschwindigkeitsanzeige in Zahlen-, Balken- oder Zeigerform umfassen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

## Bezugszeichenaufstellung

| | | | |
|---|---|---|---|
| 1 | Steuerungssystem | 30 | Lautsprecher |
| 2,2' | Steuervorrichtung | 31 | Anzeigemittel |
| 3 | Maschine | | |
| 4 | Industrieroboter | | Winkelbeschleunigung |
| 5 | Leitrechner | | normales Drehen |
| 6 | Mensch-Maschine-Schnittstelle | $\vec{a}_{1,2,3}$ | Winkelbeschleunigung Anschubsen |
| 7 | Bedienperson | | Anschubsen |
| 8 | Handbediengerät | $\omega_N$ | Winkelgeschwindigkeit normales Drehen |
| 9 | Bedienpanel | | normales Drehen |
| 10 | Eingabevorrichtung | $\omega_1, \omega_2, \omega_3$ | Winkelgeschwindigkeit Anschubsen |
| 11 | berührungssensitiver Bildschirm | | Anschubsen |
| 12 | Eingabetaste | B1 | erster Betriebsmodus |
| 13 | Bewegungsantrieb | B2 | zweiter Betriebsmodus |
| 14 | Motor | A1 | Anschubs-Kennlinie 1 |
| 15 | Magnetventil | A2 | Anschubs-Kennlinie 2 |
| 16 | Bedienelement | A3 | Anschubs-Kennlinie 3 |
| 17 | Drehsteller-Bedienelement | TNL1 | tatsächliche Nachlaufzeit 1 |
| 18 | Betätigungsorgan | TNL2 | tatsächliche Nachlaufzeit 2 |

(fortgesetzt)

| 19 | Markierung | TNL3 | tatsächliche Nachlaufzeit 3 |
|----|-----------|------|------------------------------|
| 20 | Auswerte- und Steuervorrichtung | VNL2 | virtuelle Nachlaufzeit 2 |
| 21 | sensortechnisches Erfassungsmittel | VNL3 | virtuelle Nachlaufzeit 3 |
| 22 | Drehachse | $t_1$ | Bewertungszeitspanne |
| 23 | Drehwiderstand-Generierungsmittel | | |
| 24 | Evaluierungszeitpunkt | | |
| 25 | Berührungs- oder Ergreifungserkennungsmittel | | |
| 26 | Sensor (kapazitiv) | | |
| 27 | Abbruchzeitpunkt | | |
| 28 | akustische Signalisierungsvorrichtung | | |
| 29 | visuelle Signalisierungsvorrichtung | | |

## Patentansprüche

1. Steuervorrichtung (2, 2') für industrielle Maschinen (3) mit gesteuerten Bewegungsantrieben (13) für Maschinenkomponenten, umfassend eine Mensch-Maschine-Schnittstelle (6) mit wenigstens einem Bedienelement (16) zur manuellen Beeinflussung oder Vorgabe von Verstellbewegungen von zumindest einer der Maschinenkomponenten, wobei zumindest ein Bedienelement (16) als Drehsteller-Bedienelement (17) mit einem um eine Drehachse (22) drehbar gelagerten Betätigungsorgan (18) ausgebildet ist, welches Betätigungsorgan (18) durch Betätigungskraft einer Bedienperson verdrehbar ist, wobei Drehbewegungen des Betätigungsorgans (18) respektive seiner Drehachse (22) zur Ableitung von Steuerbefehlen von einer elektronischen Auswerte- und Steuervorrichtung (20) evaluiert werden, und wobei die Auswerte- und Steuervorrichtung (20) zur automatischen Unterscheidung zumindest zwischen einem ersten Betriebsmodus (B1) und einem zweiten Betriebsmodus (B2) ausgebildet ist, wobei im ersten Betriebsmodus (B1) Verstellbewegungen einer angesteuerten Maschinenkomponente nur so lange ausgeführt werden, solange von der Auswerte- und Steuervorrichtung (20) eine Drehbewegung des Betätigungsorgans (18) respektive seiner Drehachse (22) erfassbar ist, **dadurch gekennzeichnet, dass** im zweiten Betriebsmodus (B2) Verstellbewegungen einer angesteuerten Maschinenkomponente unmittelbar nach Beendigung der Drehbewegung des Betätigungsorgans (18) oder seiner Drehachse (22) ohne einer Unterbrechung der Verstellbewegung der angesteuerten Maschinenkomponente für eine zeitlich begrenzte Nachlaufzeit (VNL2, VNL3) fortgesetzt werden, wobei die automatische Unterscheidung zwischen dem ersten und dem zweiten Betriebsmodus (B1, B2) basierend auf einer von der Auswerte- und Steuervorrichtung (20) erfassten Winkelgeschwindigkeit ($\omega_N$, $\omega_1$, $\omega_2$, $\omega_3$) oder Winkel-beschleunigung ($\vec{a}_N$, $\vec{a}_1$, $\vec{a}_2$, $\vec{a}_3$) vorgenommen wird, welche Winkelgeschwindigkeit ($\omega_N$, $\omega_1$, $\omega_2$, $\omega_3$) oder Winkelbeschleunigung ($\vec{a}_N$, $\vec{a}_1$, $\vec{a}_2$, $\vec{a}_3$) während oder nach einer Anfangsphase einer Drehbetätigung des Betätigungsorgans (18) vorliegt, oder zu einem Evaluierungszeitpunkt (24) nach dem Beginn einer gegenüber dem Betätigungsorgan (18) jeweils eingeleiteten Drehbetätigung des Betätigungsorgans (18) vorliegt oder vorhanden ist, und dass die Auswerte- und Steuervorrichtung (20) zur automatischen Umschaltung zwischen dem ersten und zweiten Betriebsmodus (B1, B2) und umgekehrt, respektive zur automatischen Aktivierung des ersten oder zweiten Betriebsmodus (B1, B2) ausgebildet ist.

2. Steuervorrichtung nach Anspruch 1, **dadurch gekennzeichnet, dass** von der Auswerte- und Steuervorrichtung (20) eine Umschaltung auf den zweiten Betriebsmodus (B2) oder eine Aktivierung des zweiten Betriebsmodus (B2) vorgenommen wird, wenn die erfasste Winkelgeschwindigkeit ($\omega_1$, $\omega_2$, $\omega_3$) oder Winkelbeschleunigung ($\vec{a}_1$, $\vec{a}_2$, $\vec{a}_3$) des Betätigungsorgans (18) respektive seiner Drehachse (22) unmittelbar nach dem Beginn der Einleitung einer Drehbewegung gegenüber dem Betätigungsorgan (18) einen vordefinierten Schwellwert oder einen hierzu gleichkommenden Dynamikkennwert erreicht hat oder überschreitet.

3. Steuervorrichtung nach Anspruch 1 oder 2, **dadurch gekennzeichnet, dass** die Auswerte- und Steuervorrichtung (20) dazu ausgebildet ist, eine Nachlaufzeit (VNL2, VNL3) oder ein Nachlaufverhalten der Verstellbewegung der angesteuerten Maschinenkomponente in Abhängigkeit von mehreren vordefinierten Schwellwerten festzulegen, welche unterschiedlichen Schwellwerte durch unterschiedlich hohe Winkelgeschwindigkeiten ($\omega_2$, $\omega_3$) oder Winkelbeschleunigungen ($\vec{a}_2$, $\vec{a}_3$) des Betätigungsorgans (18) respektive seiner Drehachse (22) unmittelbar nach dem Beginn der Einleitung einer Drehbewegung gegenüber dem Betätigungsorgan (18) definiert sind.

4. Steuervorrichtung nach einem der vorhergehenden Ansprüche, **dadurch gekennzeichnet, dass** die Auswerte- und Steuervorrichtung (20) dazu ausgebildet ist, den zweiten Betriebsmodus (B2) einzuleiten oder darauf umzuschalten, wenn zusätzlich mittels einem Berührungs- oder Ergreifungserkennungsmittel (25), beispielsweise mittels einem kapazitiven Sensor (26), detektiert wird, dass das Betätigungsorgan (18) von der Bedienperson losgelassen wurde.

5. Steuervorrichtung nach einem der vorhergehenden Ansprüche, **dadurch gekennzeichnet, dass** die Auswerte- und Steuervorrichtung (20) dazu ausgebildet ist, eine Nachlaufzeit (VNL2, VNL3) oder ein Nachlaufverhalten der Verstellbewegung der angesteuerten Maschinenkomponente in Abhängigkeit der aktuellen Position der angesteuerten Maschinenkomponente, beispielsweise in Bezug auf eine technische oder mechanische Endposition oder in Bezug auf einen kollisionsfreien Bewegungsspielraum, unterschiedlich festzulegen.

6. Steuervorrichtung nach einem der vorhergehenden Ansprüche, **dadurch gekennzeichnet, dass** die Auswerte- und Steuervorrichtung (20) dazu ausgebildet ist, eine Nachlaufzeit (VNL2, VNL3) oder ein Nachlaufverhalten, beispielsweise einen Geschwindigkeitsverlauf, der Verstellbewegung der angesteuerten Maschinenkomponente zumindest einmal oder mehrmals zu erhöhen, wenn die erfasste Winkelgeschwindigkeit ($\omega_2$, $\omega_3$) oder Winkelbeschleunigung ($\vec{a}_2$, $\vec{a}_3$) des Betätigungsorgans (18) oder seiner Drehachse (22) zumindest einen vordefinierten Schwellwert innerhalb einer vordefinierten Bewertungszeitspanne (ti) zweimal oder mehrmals erreicht oder überschreitet.

7. Steuervorrichtung nach Anspruch 6, **dadurch gekennzeichnet, dass** die vordefinierte Bewertungszeitspanne (ti) durch eine erneute Drehbetätigung des Betätigungsorgans (18) vor dem Eintreten von dessen Stillstand, oder durch eine erneute Drehbetätigung des Betätigungsorgans (18) innerhalb von weniger als 2 Sekunden, vorzugsweise von weniger als 1 Sekunde, nach einem Loslassen des Betätigungsorgans (18) durch die Bedienperson definiert ist.

8. Steuervorrichtung nach einem der vorhergehenden Ansprüche, **dadurch gekennzeichnet, dass** der zweite Betriebsmodus (B2) beendet und eine aktuell ausgeführte Verstellbewegung einer angesteuerten Maschinenkomponente umgehend gestoppt wird, wenn mittels einem Berührungs- oder Ergreifungserkennungsmittel (25), beispielsweise mittels einem kapazitiven Sensor (26), detektiert wird, dass das Betätigungsorgan (18) während dem Vorliegen des zweiten Betriebsmodus (B2) von der Bedienperson wieder ergriffen und von der Bedienperson daraufhin keine Drehbetätigung eingeleitet wurde, oder von der Bedienperson eine Drehbetätigung des Betätigungsorgans (18) in die Gegenrichtung eingeleitet wurde.

9. Steuervorrichtung nach einem der vorhergehenden Ansprüche, **dadurch gekennzeichnet, dass** der zweite Betriebsmodus (B2) beendet und eine aktuell ausgeführte Verstellbewegung einer angesteuerten Maschinenkomponente umgehend gestoppt wird, wenn während dem Vorliegen des zweiten Betriebsmodus (B2) von der Bedienperson eine Drehbetätigung des Betätigungsorgans (18) in die Gegenrichtung eingeleitet wird.

10. Steuervorrichtung nach einem der vorhergehenden Ansprüche, **dadurch gekennzeichnet, dass** der zweite Betriebsmodus (B2) beendet und eine aktuell ausgeführte Verstellbewegung einer angesteuerten Maschinenkomponente umgehend gestoppt wird, wenn das Betätigungsorgan (18) seitens der Bedienperson in Axialrichtung seiner Drehachse (22) mit einem Mindestwert einer Axialkraft beaufschlagt wird, oder in Axialrichtung seiner Drehachse (22) verstellt, insbesondere hineingedrückt, wird.

11. Steuervorrichtung nach einem der vorhergehenden Ansprüche, **dadurch gekennzeichnet, dass** eine akustische und/oder visuelle Signalisierungsvorrichtung (28, 29) ausgebildet ist, welche der Bedienperson beim Vorliegen des zweiten Betriebsmodus (B2) das Nachlaufverhalten der angesteuerten Maschinenkomponente signalisiert, insbesondere zur Abgabe einer akustischen und/oder visuellen Rückmeldung über das allmähliche Verstreichen oder Ablaufen der tatsächlichen und/oder virtuellen Nachlaufzeit (TNL1, TNL2, TNL3, VNL2, VNL3) und/oder über die allmählich abnehmende Nachlaufgeschwindigkeit der angesteuerten Maschinenkomponente vorgesehen ist.

12. Steuervorrichtung nach Anspruch 11, **dadurch gekennzeichnet, dass** die akustische und/oder visuelle Signalisierungsvorrichtung (28, 29) wenigstens einen Lautsprecher (30) und/oder wenigstens ein Anzeigemittel (31), beispielsweise eine Restdaueranzeige und/oder eine Geschwindigkeitsanzeige in Zahlen-, Balken- oder Zeigerform, umfasst.

13. Steuervorrichtung nach einem der vorhergehenden Ansprüche, **dadurch gekennzeichnet, dass** das Betätigungsorgan (18) oder dessen Drehachse (22) mit einem gesteuert veränderlichen Drehwiderstand-Generierungsmittel (23) in mechanischer Wechselwirkung steht oder bewegungsgekoppelt ist, wobei die Auswerte- und Steuervorrichtung (20) zur veränderlichen Einstellung von Drehwiderständen des Drehwiderstand-Generierungsmittels (23) ausgebildet ist.

14. Verfahren zum Betreiben einer Steuervorrichtung (2, 2') für industrielle Maschinen (3) mit gesteuerten Bewegungsantrieben (13) für Maschinenkomponenten, wobei eine Mensch-Maschine-Schnittstelle (6) mit wenigstens einem Bedienelement (16) zur manuellen Beeinflussung oder Vorgabe von Verstellbewegungen von zumindest einer der Maschinenkomponenten vorgesehen ist, wobei zumindest ein Bedienelement (16) als Drehsteller-Bedienelement (17) mit einem um eine Drehachse (22) drehbar gelagerten Betätigungsorgan (18) ausgebildet ist, welches Betätigungsorgan (18) durch Betätigungskraft einer Bedienperson verdrehbar ist, wobei Drehbewegungen des Betätigungsorgans (18) respektive seiner Drehachse (22) zur Ableitung von Steuerbefehlen von einer elektronischen Auswerte- und Steuervorrichtung (20) evaluiert werden, und wobei die Auswerte- und Steuervorrichtung (20) zur automatischen Unterscheidung zumindest zwischen einem ersten Betriebsmodus (B1) und einem zweiten Betriebsmodus (B2) ausgebildet ist, wobei im ersten Betriebsmodus (B1) Verstellbewegungen einer angesteuerten Maschinenkomponente nur so lange ausgeführt werden, solange von der Auswerte- und Steuervorrichtung (20) eine Drehbewegung des Betätigungsorgans (18) respektive seiner Drehachse (22) erfassbar ist, **dadurch gekennzeichnet, dass** im zweiten Betriebsmodus (B2) Verstellbewegungen einer angesteuerten Maschinenkomponente unmittelbar nach Beendigung der Drehbewegung des Betätigungsorgans (18) oder seiner Drehachse (22) ohne einer Unterbrechung der Verstellbewegung der angesteuerten Maschinenkomponente für eine zeitlich begrenzte Nachlaufzeit (VNL2, VNL3) fortgesetzt werden, wobei die automatische Unterscheidung zwischen dem ersten und dem zweiten Betriebsmodus (B1, B2) basierend auf einer von der Auswerte- und Steuervorrichtung (20) erfassten Winkelgeschwindigkeit ($\omega_N$, $\omega_1$, $\omega_2$, $\omega_3$) oder Winkelbeschleunigung ( $\vec{a}_N$ , $\vec{a}_1$ , $\vec{a}_2$ , $\vec{a}_3$ ) vorgenommen wird, welche Winkelgeschwindigkeit ($\omega_N$, $\omega_1$, $\omega_2$, $\omega_3$) oder Winkelbeschleunigung ( $\vec{a}_N$ , $\vec{a}_1$ , $\vec{a}_2$ $\vec{a}_3$ ) während oder nach einer Anfangsphase einer Drehbetätigung des Betätigungsorgans (18) vorliegt, oder zu einem Evaluierungszeitpunkt (24) nach dem Beginn einer gegenüber dem Betätigungsorgan (18) jeweils eingeleiteten Drehbetätigung des Betätigungsorgans (18) vorliegt oder vorhanden ist, und dass die Auswerte- und Steuervorrichtung (20) zur automatischen Umschaltung zwischen dem ersten und zweiten Betriebsmodus (B1, B2) und umgekehrt, respektive zur automatischen Aktivierung des ersten oder zweiten Betriebsmodus (B1, B2) ausgebildet ist.

**Claims**

1. A control device (2, 2') for industrial machines (3) with controlled movement drives (13) for machine components, comprising a human-machine interface (6) with at least one operating element (16) for manually influencing or predetermining adjustment movements of at least one of the machine components, wherein at least one operating element (16) is formed as a rotary adjuster operating element (17) with an actuation member (18) mounted so as to be rotatable about an axis of rotation (22), said actuation member (18) being rotatable by actuation force of an operator, wherein rotation movements of the actuation member (18), or its axis of rotation (22), are evaluated by an electronic evaluation and control device (20) for deriving control commands, and wherein the evaluation and control device (20) is formed for automatic differentiation at least between a first operating mode (B 1) and a second operating mode (B2), wherein in the first operating mode (B1), adjustment movements of a controlled machine component are performed only as long as a rotation movement of the actuation member (18) or of its axis of rotation (22) can be detected by the evaluation and control device (20), **characterized in that**, in the second operating mode (B2), adjustment movements of a controlled machine component are immediately continued for a temporally limited follow-up time (VNL2, VNL3) after termination of the rotation movement of the actuation member (18) or its axis of rotation (22) without an interruption of the adjustment movement of the controlled machine component, wherein the automatic differentiation between the first and the second operating mode (B1, B2) is carried out based on an angular velocity ($\omega_N$, $\omega_1$, $\omega_2$, $\omega_3$) or angular acceleration ( $\vec{a}_N$ $\vec{a}_1$ , $\vec{a}_2$ , $\vec{a}_3$ ) detected by the evaluation and control device (20), said angular velocity ($\omega_N$, $\omega_1$, $\omega_2$, $\omega_3$) or angular acceleration ( $\vec{a}_N$ , $\vec{a}_1$ , $\vec{a}_2$ , $\vec{a}_3$ ) being present during or after an initial phase of a rotary actuation of the actuation member (18), or being present or given at an evaluation time (24) after the beginning of a rotary actuation of the actuation member (18) in each case initiated relative to the actuation member (18), and that the evaluation and control device (20) is configured for automatically switching between the first and second operating mode (B1, B2) and vice versa, or for automatically activating the first or second operating mode (B 1, B2).

2. The control device according to claim 1, **characterized in that** the evaluation and control device (20) performs switching from the second operating mode (B2) or an activation of the second operating mode (B2) when the detected angular velocity ($\omega_1$, $\omega_2$, $\omega_3$) or angular acceleration ( $\vec{a}_1$ , $\vec{a}_2$ , $\vec{a}_3$ ) of the actuation member (18) or its axis of rotation (22) has reached or exceeded a predefined threshold value or a dynamic value equivalent thereto immediately after the beginning of the initiation of a rotation movement relative to the actuation member (18).

3. The control device according to claim 1 or 2, **characterized in that** the evaluation and control device (20) is configured to determine a follow-up time (VNL2, VNL3) or a follow-up behavior of the adjustment movement of the controlled machine component depending on multiple predefined threshold values, said different threshold values being defined by differently high angular velocities $\omega_2$, $\omega_3$) or angular accelerations ( $\vec{a}_2$ $\vec{a}_3$ ) of the actuation member (18) or its axis of rotation (22) immediately after the beginning of the initiation of a rotation movement relative to the actuation member (18).

4. The control device according to one of the preceding claims, **characterized in that** the evaluation and control device (20) is configured to initiate the second operating mode (B2) or to switch to it when it is additionally detected by means of a touch or grip detection means (25), for example by means of a capacitive sensor (26), that the actuation member (18) was released by the operator.

5. The control device according to one of the preceding claims, **characterized in that** the evaluation and control device (20) is configured to differently determine a follow-up time (VNL2, VNL3) or a follow-up behavior of the adjustment movement of the controlled machine component depending on the current position of the controlled machine component, for example with respect to a technical or mechanical final position or with respect to a collision-free range of motion.

6. The control device according to one of the preceding claims, **characterized in that** the evaluation and control device (20) is configured to, at least once or multiple times, increase a follow-up time (VNL2, VNL3) or a follow-up behavior, for example a speed progression, of the adjustment movement of the controlled machine component when the detected angular velocity $\omega_2$, $\omega_3$) or angular acceleration ( $\vec{a}_2$ , $\vec{a}_3$ ) of the actuation member (18) or its axis of rotation (22) reaches or exceeds at least one predefined threshold value within a predefined evaluation interval (ti) twice or multiple times.

7. The control device according to claim 6, **characterized in that** the predefined evaluation interval (ti) is defined by a renewed rotary actuation of the actuation member (18) before the occurrence of its standstill, or by a renewed rotary actuation of the actuation member (18) within less than 2 seconds, preferably less than 1 second, after release of the actuation member (18) by the operator.

8. The control device according to one of the preceding claims, **characterized in that** the second operating mode (B2) is terminated and a currently performed adjustment movement of a controlled machine component is immediately stopped when it is detected by means of a touch or grip detection means (25), for example by means of a capacitive sensor (26), that the actuation member (18) was gripped again by the operator during the presence of the second operating mode (B2) and no rotary actuation was then initiated by the operator, or a rotary actuation of the actuation member (18) in the opposite direction was initiated by the operator.

9. The control device according to one of the preceding claims, **characterized in that** the second operating mode (B2) is terminated and a currently performed adjustment movement of a controlled machine component is immediately stopped when a rotary actuation of the actuation member (18) in the opposite direction was initiated by the operator during the presence of the second operating mode (B2).

10. The control device according to one of the preceding claims, **characterized in that** the second operating mode (B2) is terminated and a currently performed adjustment movement of a controlled machine component is immediately stopped when the actuation member (18) is acted upon by the operator in the axial direction of its axis of rotation (22) with a minimum value of an axial force, or is adjusted in the axial direction of its axis of rotation (22), in particular is pressed in.

11. The control device according to one of the preceding claims, **characterized in that** an acoustic and/or visual signaling device (28, 29) is formed, which signals the follow-up behavior of the controlled machine component to the operator during the presence of the second operating mode (B2), in particular is provided for outputting an acoustic and/or visual feedback on the gradual elapse or expiry of the actual and/or virtual follow-up time (TNL1, TNL2, TNL3, VNL2, VNL3) and/or about the gradually decreasing follow-up speed of the controlled machine component.

12. The control device according to claim 11, **characterized in that** the acoustic and/or visual signaling device (28, 29) comprises at least one speaker (30) and/or at least one display means (31), for example a remaining time display and/or a speed display in numerical, bar or pointer form.

13. The control device according to one of the preceding claims, **characterized in that** the actuation member (18) or its axis of rotation (22) interacts mechanically or is motion-coupled with a controlled variable rotational resistance generating means (23), wherein the evaluation and control device (20) is formed for variable adjustment of rotational resistances of the rotational resistance generating means (23).

14. A method for operating a control device (2, 2') for industrial machines (3) with controlled movement drives (13) for machine components, wherein a human-machine interface (6) with at least one operating element (16) for manually influencing or predetermining adjustment movements of at least one of the machine components is provided, wherein at least one operating element (16) is formed as a rotary adjuster operating element (17) with an actuation member (18) mounted so as to be rotatable about an axis of rotation (22), said actuation member (18) being rotatable by actuation force of an operator, wherein rotation movements of the actuation member (18), or its axis of rotation (22), are evaluated by an electronic evaluation and control device (20) for deriving control commands, and wherein the evaluation and control device (20) is formed for automatic differentiation at least between a first operating mode (B1) and a second operating mode (B2), wherein in the first operating mode (B1), adjustment movements of a controlled machine component are performed only as long as a rotation movement of the actuation member (18) or of its axis of rotation (22) can be detected by the evaluation and control device (20), **characterized in that**, in the second operating mode (B2), adjustment movements of a controlled machine component are immediately continued for a temporally limited follow-up time (VNL2, VNL3) after termination of the rotation movement of the actuation member (18) or its axis of rotation (22) without an interruption of the adjustment movement of the controlled machine component, wherein the automatic differentiation between the first and the second operating mode (B1, B2) is carried out based on an angular velocity ($\omega_N$, $\omega_1$, $\omega_2$, $\omega_3$) or angular acceleration ($\vec{a}_N$, $\vec{a}_1$, $\vec{a}_2$, $\vec{a}_3$) detected by the evaluation and control device (20), said angular velocity ($\omega_N$, $\omega_1$, $\omega_2$, $\omega_3$) or angular acceleration ($\vec{a}_N$, $\vec{a}_1$, $\vec{a}_2$, $\vec{a}_3$) being present during or after an initial phase of a rotary actuation of the actuation member (18), or being present or given at an evaluation time (24) after the beginning of a rotary actuation of the actuation member (18) in each case initiated relative to the actuation member (18), and that the evaluation and control device (20) is configured for automatically switching between the first and second operating mode (B1, B2) and vice versa, or for automatically activating the first or second operating mode (B 1, B2).

## Revendications

1. Dispositif de commande (2, 2') pour machines industrielles (3) avec des entraînements de déplacement contrôlés (13) pour des composants de la machine, comprenant une interface homme-machine (6) avec au moins un élément de commande (16) pour le contrôle manuel ou la spécification de déplacements de réglage d'au moins un des composants de la machine, dans lequel au moins un élément de commande (16) est conçu comme un élément de commande à actionneur rotatif (17) avec un organe d'actionnement (18) logé de manière rotative autour d'un axe de rotation (22), cet organe d'actionnement (18) pouvant être mis en rotation par la force d'actionnement d'un opérateur, dans lequel les mouvements rotatifs de l'organe d'actionnement (18) par rapport à son axe de rotation (22) sont évalués, afin d'en déduire des instructions, par un dispositif électronique d'analyse et de commande (20) et dans lequel le dispositif d'analyse et de commande (20) est conçu pour différencier automatiquement au moins entre un premier mode de fonctionnement (B1) et un deuxième mode de fonctionnement (B2), dans lequel, dans le premier mode de fonctionnement (B1), les mouvements de réglage d'un composant de machine contrôlé ne sont exécutés que tant que le dispositif d'analyse et de commande (20) détecte un mouvement de rotation de l'organe d'actionnement (18) par rapport à son axe de rotation (22), **caractérisé en ce que**, dans le deuxième mode de fonctionnement (B2), les mouvements de réglage d'un composant de machine contrôlé sont continués immédiatement après la fin du mouvement de rotation de l'organe d'actionnement (18) ou de son axe de rotation (22) sans interruption du mouvement de réglage du composant de machine contrôlé pendant un temps d'inertie limité (VNL2, VNL3), dans lequel la différenciation automatique entre les premier et deuxième modes de fonctionnement (B1, B2) est effectuée sur la base d'une vitesse angulaire ($\omega_N$, $\omega_1$, $\omega_2$, $\omega_3$) ou d'une accélération angulaire ( $\vec{a}_N$ , $\vec{a}_1$ , $\vec{a}_2$ , $\vec{a}_3$ ), mesurée par le dispositif d'analyse et de commande (20), cette vitesse angulaire ($\omega_N$, $\omega_1$, $\omega_2$, $\omega_3$) ou accélération angulaire ( $\vec{a}_N$ , $\vec{a}_1$ , $\vec{a}_2$ , $\vec{a}_3$ ) existant pendant ou après une phase initiale d'un actionnement rotatif de l'organe d'actionnement (18) ou à un moment d'évaluation (24) après le début d'un actionnement rotatif de l'organe d'actionnement (18) initié respectivement par rapport à l'organe d'actionnement (18) et **en ce que** le dispositif d'analyse et de commande (20) est conçu pour la commutation automatique entre les premier et deuxième modes de fonctionnement (B1, B2) et inversement, respectivement pour l'activation automatique des premier et deuxième modes de fonctionnement (B1, B2).

2. Dispositif de commande selon la revendication 1, **caractérisé en ce que** le dispositif d'analyse et de commande (20) effectue une commutation dans le deuxième mode de fonctionnement (B2) ou une activation du deuxième mode de fonctionnement (B2) lorsque la vitesse angulaire ($\omega_1$, $\omega_2$, $\omega_3$) ou l'accélération angulaire ( $\vec{a}_1$ , $\vec{a}_2$ , $\vec{a}_3$ ) mesurée de l'organe d'actionnement (18) par rapport à son axe de rotation (22), a atteint ou dépassé, après le début de l'application d'un mouvement de rotation par rapport à l'organe d'actionnement (18), une valeur seuil prédéfinie ou une valeur caractéristique dynamique égale à celle-ci.

3. Dispositif de commande selon la revendication 1 ou 2, **caractérisé en ce que** le dispositif d'analyse et de commande (20) est conçu pour définir un temps d'inertie (VNL2, VNL3) ou un comportement inertiel du mouvement rotatif du composant de machine contrôlé en fonction de plusieurs valeurs seuils prédéfinies, ces différentes valeurs seuils étant définies par différentes vitesses angulaires $\omega_2$, $\omega_3$) ou accélérations angulaires ( $\vec{a}_2$ , $\vec{a}_3$ ) de l'organe d'actionnement (18) par rapport à son axe de rotation (22), immédiatement après le début de l'application d'un mouvement de rotation par rapport à l'organe d'actionnement (18).

4. Dispositif de commande selon l'une des revendications précédentes, **caractérisé en ce que** le dispositif d'analyse et de commande (20) est conçu pour initier ou commuter dans le deuxième mode de fonctionnement (B2) lorsqu'il est détecté en outre, à l'aide d'un moyen de détection de contact ou de préhension (25), par exemple d'un capteur capacitif (26), que l'organe d'actionnement (18) a été relâché par l'opérateur.

5. Dispositif de commande selon l'une des revendications précédentes, **caractérisé en ce que** le dispositif d'analyse et de commande (20) est conçu pour définir de manière différente un temps d'inertie (VNL2, VNL3) ou un comportement inertiel du mouvement rotatif du composant de machine contrôlé en fonction de la position actuelle du composant de machine contrôlé, par exemple par rapport à une position finale technique ou mécanique ou par rapport à un jeu de mouvement sans collision.

6. Dispositif de commande selon l'une des revendications précédentes, **caractérisé en ce que** le dispositif d'analyse et de commande (20) est conçu pour augmenter au moins une fois ou plusieurs fois un temps d'inertie (VNL2, VNL3) ou un comportement inertiel, par exemple une évolution de la vitesse, du mouvement rotatif du composant de machine contrôlé lorsque la vitesse angulaire $\omega_2$, $\omega_3$) ou l'accélération angulaire ( $\vec{a}_2$ , $\vec{a}_3$ ) mesurée de l'organe d'actionnement (18) ou de son axe de rotation (22) atteint ou dépasse deux fois ou plusieurs fois au moins une valeur seuil prédéfinie dans une période d'évaluation ($t_1$) prédéfinie.

**7.** Dispositif de commande selon la revendication 6, **caractérisé en ce que** la période d'évaluation ($t_1$) prédéfinie est définie par un nouvel actionnement rotatif de l'organe d'actionnement (18) avant son immobilisation ou par un nouvel actionnement rotatif de l'organe d'actionnement (18) dans un délai inférieur à 2 secondes, de préférence inférieur à 1 seconde, après le relâchement de l'organe d'actionnement (18) par l'opérateur.

**8.** Dispositif de commande selon l'une des revendications précédentes, **caractérisé en ce que** le deuxième mode de fonctionnement (B2) se termine et un mouvement de réglage d'un composant de machine contrôlé, actuellement exécuté, est immédiatement stoppé lorsque, à l'aide d'un moyen de détection de contact ou de préhension (25), par exemple à l'aide d'un capteur capacitif (26), il est détecté que l'organe d'actionnement (18) est à nouveau saisi par l'opérateur pendant le deuxième mode de fonctionnement (B2) et qu'aucun actionnement rotatif n'est ensuite appliqué par l'opérateur ou que l'opérateur effectue un actionnement rotatif de l'organe d'actionnement (18) dans la direction opposée.

**9.** Dispositif de commande selon l'une des revendications précédentes, **caractérisé en ce que** le deuxième mode de fonctionnement (B2) se termine et un mouvement de réglage d'un composant de machine contrôlé, actuellement exécuté, est immédiatement stoppé lorsque, pendant le deuxième mode de fonctionnement (B2), un actionnement rotatif de l'organe d'actionnement (18) est effectué par l'opérateur dans la direction opposée.

**10.** Dispositif de commande selon l'une des revendications précédentes, **caractérisé en ce que** le deuxième mode de fonctionnement (B2) se termine et un mouvement de réglage d'un composant de machine contrôlé, actuellement exécuté, est immédiatement stoppé lorsque l'organe d'actionnement (18) est sollicité du côté de l'opérateur dans la direction axiale de son axe de rotation (22) avec une valeur minimale d'une force axiale ou est déplacé, plus particulièrement comprimé vers l'intérieur dans la direction axiale de son axe de rotation (22).

**11.** Dispositif de commande selon l'une des revendications précédentes, **caractérisé en ce qu'**un dispositif de signalisation acoustique et/ou visuel (28, 29) est prévu, qui signale à l'opérateur, dans le deuxième mode de fonctionnement (B2), le comportement inertiel du composant de machine contrôlé, plus particulièrement pour l'émission d'un message de retour acoustique et/ou visuel grâce à l'écoulement ou à l'expiration progressive du temps d'inertie réel et/ou virtuel (TNL1, TNL2, TNL3, VNL2, VNL3) et/ou grâce à vitesse inertielle, diminuant progressivement, du composant de machine contrôlé.

**12.** Dispositif de commande selon la revendication 11, **caractérisé en ce que** le dispositif de signalisation acoustique et/ou visuel (28, 29) comprend au moins un haut-parleur (30) et/ou au moins un moyen d'affichage (31), par exemple un affichage de temps restant et/ou un affichage de vitesse sous forme numérique, de barres ou d'aiguilles.

**13.** Dispositif de commande selon l'une des revendications précédentes, **caractérisé en ce que** l'organe d'actionnement (18) ou son axe de rotation (22) est en interaction mécanique ou couplé en mouvement avec un moyen de production d'une résistance à la rotation (23) variable de manière contrôlée, dans lequel le dispositif d'analyse et de commande (20) est conçu pour le réglage variable des résistances à la rotation du moyen de production d'une résistance à la rotation (23).

**14.** Procédé de fonctionnement d'un dispositif de commande (2, 2') pour des machines industrielles (3) avec des entraînements de déplacement contrôlés (13) pour des composants de la machine, dans lequel est prévue une interface homme-machine (6) avec au moins un élément de commande (16) pour le contrôle manuel ou la spécification de déplacements de réglage d'au moins un des composants de la machine, dans lequel au moins un élément de commande (16) est conçu comme un élément de commande à actionneur rotatif (17) avec un organe d'actionnement (18) logé de manière rotative autour d'un axe de rotation (22), cet organe d'actionnement (18) pouvant être mis en rotation par la force d'actionnement d'un opérateur, dans lequel les mouvements rotatifs de l'organe d'actionnement (18) par rapport à son axe de rotation (22) sont évalués, afin d'en déduire des instructions, par un dispositif électronique d'analyse et de commande (20) et dans lequel le dispositif d'analyse et de commande (20) est conçu pour différencier automatiquement au moins entre un premier mode de fonctionnement (B1) et un deuxième mode de fonctionnement (B2), dans lequel, dans le premier mode de fonctionnement (B 1), les mouvements de réglage d'un composant de machine contrôlé ne sont exécutés que tant que le dispositif d'analyse et de commande (20) détecte un mouvement de rotation de l'organe d'actionnement (18) par rapport à son axe de rotation (22), **caractérisé en ce que**, dans le deuxième mode de fonctionnement (B2), les mouvements de réglage d'un composant de machine contrôlé sont continués immédiatement après la fin du mouvement de rotation de l'organe d'actionnement (18) ou de son axe de rotation (22) sans interruption du mouvement de réglage du composant de machine contrôlé pendant un temps d'inertie limité (VNL2, VNL3), dans lequel la différenciation automatique entre les premier et deuxième modes de fonctionnement (B 1, B2) est effectuée sur la base d'une vitesse angulaire ($\omega_N$, $\omega_1$, $\omega_2$, $\omega_3$) ou d'une accélération angulaire ( $\vec{a}_N$ , $\vec{a}_1$ , $\vec{a}_2$ , $\vec{a}_3$ ), mesurée par le dispositif d'analyse et de commande (20), cette vitesse angulaire ($\omega_N$, $\omega_1$, $\omega_2$, $\omega_3$) ou accélération angulaire ( $\vec{a}_N$ , $\vec{a}_1$ , $\vec{a}_2$ , $\vec{a}_3$ ) pendant ou après une phase initiale d'un actionnement rotatif de l'organe d'actionnement (18) ou à un moment d'évaluation (24) après le début d'un actionnement rotatif de l'organe d'actionnement (18) initié respectivement par rapport à l'organe d'actionnement (18) et **en ce que** le dispositif d'analyse et de commande (20) est conçu pour la commutation automatique entre les premier et deuxième modes de fonctionnement (B1, B2) et inversement, respectivement pour l'activation automatique des premier et deuxième modes de fonctionnement (B 1, B2).

Fig.1

**Fig.2**

**Fig.3**

## Fig.4

## Fig.5

Normales Drehen: Bewegungs-Zeitverlauf

Drehbewegung Betätigungsorgan
und Maschinenbewegung

ω [rad/s]
v [m/s]

$\overline{\alpha_N}$

B1

Drehbewegungsverläufe Betätigungsorgan

$\Delta\omega_N$

$\Delta t$

~ 24

t [s]

Start Drehbewegung Betätigungsorgan

Stop Drehbewegung Betätigungsorgan

## Fig.6

Anschubsen: Bewegungs-Zeitverlauf

Drehbewegung Betätigungsorgan
und Maschinenbewegung

ω [rad/s]
v [m/s]

24 ---

B2

TNL3

VNL3

A3

$\overline{\alpha_3}$

$\overline{\alpha_2}$

$\overline{\alpha_1}$

A2

$\Delta\omega_3$

TNL2

VNL2

$\Delta t$

$\Delta\omega_2$

A1

27

$\Delta t$

$\Delta\omega_1$

$\Delta t$

$t_1$

TNL1

Loslassen des Betätigungsorgans

Beendigung der Drehbewegung des Betätigungsorgans

t [s]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060255683 A1
- EP 1403619 B1
- EP 1075979 B1